# EUROPEAN PATENT APPLICATION

(11) **EP 1 136 926 A1**
(43) Date of publication of application: **26.09.2001**
(21) Application number: 00944410.0
(22) Date of filing: 12.07.2000
(51) Int. Cl.: G06F 17/60

(54) **OPTIMUM OPERATION ACHIEVEMENT METHOD, OPTIMUM OPERATION ACHIEVEMENT APPARATUS AND RESULT OBJECT**

(30) Priority: 12.07.1999 JP 23083599; 17.05.2000 JP 2000185474
(71) Applicant: Mark-I Inc., Chiyoda-ku, Tokyo 102-0083 (JP); KOJIMA, Yujiro, Tokyo 167 (JP)
(72) Inventor: KOJIMA, Yujiro, Suginami-ku Tokyo 167-0034 (JP); OHTSUKA, Masami Mark-i Inc., Chiyoda-ku Tokyo 102-0083 (JP); AONUMA, Midori Mark-i Inc., Chiyoda-ku Tokyo 102-0083 (JP); YOSHIDA, Kaori Mark-i Inc., Chiyoda-ku Tokyo 102-0083 (JP); FUJIMOTO, Jun, Mark-i Inc., Chiyoda-ku, Tokyo 102-0083 (JP)
(74) Representative: Sperling, Rüdiger, Dipl.-Ing.
(86) International application number: JP0004646
(87) International publication number: WO0104807

(57) **Abstract**

A keyword is given to an assumed operation. The keyword and/or its attribute are/is displayed by being replaced with symbols/symbol. The keyword is constituted by means of expressing each operation by hierarchizing it in compliance with a job of the operation, and causing it to have the attribute. Thus, the operation/job is simplified/unified by being made the keyword. An optimum operation is achieved by using each picture of basic image information, basic text information, time limit management information, update information, detailed past history information and basic information editing.

## Description

### Technical Field

The present invention relates to a method for optimally achieving business tasks, an apparatus for optimally achieving business tasks, which can efficiently execute business tasks, especially business tasks related to intellectual properties such as patents and trademarks, and products thereof.

### Description of Related Art

Today, intellectual property rights such as patent rights and trademark rights have become increasingly important as one of management resources for performing business firms. Management methods that manage patent and trademark applications to acquire effective rights, and software and databases that embody those management methods have been developed. However, almost all the software and databases have been developed aiming at the construction of domestic databases of respective business firms, wherein there was nothing that created a common business environment between a business firm and its attorney responsible for business tasks assigned by the firm and has embodied a method for optimally achieving business tasks. Therefore, no database and software that have achieved a method for optimally achieving business tasks in a common business environment existed.

### SUMMARY OF THE INVENTION

The present invention was developed in view of the aforementioned shortcomings, and it is therefore an object of the invention to provide a method for optimally achieving business tasks, and an apparatus for optimally achieving business tasks, which can optimally execute business tasks by creating the same business environment between a business firm and its attorney responsible for business tasks assigned by the firm, and efficiently execute business tasks in a common business environment, and the invention also provides products acquired by the corresponding method.

A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored in said computer arises, and registering the same therein;
   said keywords being assigned to respective

A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored in said computer arises, and registering the same therein;
   said keywords being assigned to respective business tasks and simultaneously being provided with information on persons capable of executing said business tasks, persons authorized to approve said executable business tasks, persons authorized to access and read the contents of said business tasks, and persons capable of executing business tasks which come after said business tasks;
preparing a letter of business tasks incidental to said keywords on a display screen;
transmitting said letter by utilizing communication means to anyone capable of executing said business tasks, persons authorized to approve said executable business tasks, persons authorized to access and read the contents of said business tasks, or persons capable of executing business tasks which come after said business tasks on the basis of said keywords provided in said letter; and
executing appointed business tasks by said persons.

A method for optimally executing business tasks, said method comprising the steps of:
assigning assumed business tasks with keywords;
converting said keywords into a plurality of languages, and registering said keywords prepared in a plurality of languages in a database of a computer;
selecting said keywords from business task keywords stored in said computer when a first business task arises;
preparing new keywords when a business task not stored in said computer arises, and registering the same therein upon receiving approval from another person in charge;
   said keywords being assigned to respective business tasks and simultaneously being provided with information on persons capable of executing said business tasks , persons authorized to approve said executable business tasks, persons authorized to access and read the contents of said business tasks, and persons capable of executing business tasks which come after said business tasks;
preparing a letter of business tasks incidental to said keywords on a display screen;
transmitting said letter by utilizing communication means to anyone capable of executing said business tasks, persons authorized to approve said executable business tasks, persons authorized to access and read the contents of said business tasks, or persons capable of executing business tasks which come after said business tasks on the basis of said keywords provided in said letter; and
executing appointed business tasks by said persons.

A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored in said computer arises, and registering the same therein;
examining said newly prepared keywords, and registering said keywords upon receiving approval of a third party by correcting the same as necessary;
   said keywords being assigned to respective business tasks and simultaneously being provided with information on persons capable of executing said business tasks, persons authorized to approve said executable business tasks, persons authorized to access and read the contents of said business tasks, and persons capable of executing business tasks which come after said business tasks;
preparing a letter of business tasks incidental to said keywords on a display screen;
transmitting said letter by utilizing communication means to anyone capable of executing said business tasks, persons authorized to approve said executable business tasks, persons authorized to access and read the contents of said business tasks, or persons capable of executing business tasks which comes after said business tasks on the basis of said keywords provided in said letter; and
executing appointed business tasks by said persons.

A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored in said computer arises, and registering the same therein;
   said keywords being assigned to respective business tasks and simultaneously being provided with information on persons capable of executing said business tasks, persons authorized to approve said executable business tasks, persons authorized to access and read the contents of said business tasks, and persons capable of executing business tasks which come after said business tasks;
receiving a letter of business tasks incidental to said keywords from a display screen;
transmitting said letter by utilizing communication means to anyone capable of executing said business tasks, persons authorized to approve said executable business tasks, persons authorized to access and read the contents of said business tasks, or persons capable of executing business tasks which come after said business tasks on the basis of said keywords provided in said letter;
executing appointed business tasks by said persons; and
calculating the time required to complete the business task on the basis of said keywords, and managing the time of the business task.

A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored in said computer arises, and registering the same therein;
   said keywords being assigned to respective business tasks and simultaneously being provided with information on persons capable of executing said business tasks, persons authorized to approve said executable business tasks, persons authorized to access and read the contents of said business tasks, and persons capable of executing business tasks which come after said business tasks;
receiving a letter of business tasks incidental to said keywords from a display screen;
transmitting said letter by utilizing communication means to anyone capable of executing said business tasks, persons authorized to approve said executable business tasks, persons authorized to access and read the contents of said business tasks, or persons capable of executing business tasks which come after said business tasks on the basis of said keywords provided in said letter;
calculating the amount of money required to complete the business task on the basis of said keywords; and executing an appointed business task by said persons.

A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored in said computer arises, and registering the same therein;
   said keywords being assigned to respective business tasks and simultaneously being provided with information on persons capable of executing said business tasks , persons authorized to approve said executable business tasks, persons authorized to access and read the contents of said business tasks, and persons capable of executing business tasks which come after said business tasks;
receiving a letter of a business task incidental to said keywords from a display screen;
transmitting said letter by utilizing communication means to anyone capable of executing said business tasks, persons authorized to approve said executable business tasks, persons authorized to access and read the contents of said business tasks, or persons capable of executing business tasks which come after said business task on the basis of said keywords provided in said letter;
acquiring a screen of business tasks pertaining to said keywords from the display screen; and
executing appointed business tasks by said persons.

A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored in said computer arises, and registering the same therein;
   said keywords being assigned to respective business tasks and simultaneously being provided with information on persons capable of executing said business tasks, persons authorized to approve said executable business tasks, persons authorized to access and read the contents of said business tasks, and persons capable of executing business tasks which come after said business tasks;
preparing a letter of a business task incidental to said keywords on a display screen;
   said letter being provided with attributes for distributing the same to items expected to be distributed; and attributes of means for transmitting the same;
transmitting said letter by utilizing communication means to anyone capable of executing said business tasks, persons authorized to approve said executable business tasks, persons authorized to access and read the contents of said business tasks, or persons capable of executing business tasks which come after said business tasks on the basis of said keywords provided in said letter;
distributing said letter to said items to be anticipated; and executing appointed business tasks by said persons.

Said screen of a business task is a screen for displaying the received business task.

Said screen of a business task is a screen for displaying the transmitted business.

Said screen of a business task is at least one of a screen of communication records, a screen of task progress records, a screen of status records, and a screen of self task management.

Said keywords are expressed classified according to their respective business tasks and are constituted so as to have attributes thereto.

Said keyword has at least one attribute, and preferably at least five attributes representing permission of using the screen, business task competence, screen accessing competence, availability with respect to organizations and/or individuals, degrees of difficulty in executing business tasks, business task risk, time-series changes in business tasks, and special situations and relevant information on other screens.

Said screen of a business task is displayed with symbols substituting for said keywords and/or attributes.

Said keywords are entered and displayed in at least one of a status field, a supplementary status field, and a detailed status field on a history preparation screen.

Said letter and/or items entered in said history preparation screen are registered in the database of a computer.

Said business tasks are executed in at least one of the manners including within an organization, between or among organizations, by an individual, between or among individuals, or between an individual and an organization.

A method for optimally executing business tasks by using respective screens of basic image information, basic text information, term management information, latest information, detailed history information and basic information edit,
said method being characterized by comprising the steps of:
shifting the screen from the basic text screen, basic image screen, latest information screen, and term management screen to the detailed history screen;
shifting the screen from the basic text screen, basic image screen, latest information screen, and term management screen to the basic information edit screen; and/or
shifting the screen from the detailed history screen to the basic information edit screen; and
communicating to transmit information by making said respective information screens shared between a person in charge of a company and an agent for information transmission so as to carry out the optimal work in the common business task environments for both parties.

A method for optimally executing business tasks by using respective screens of basic image information, basic text information, term management information, latest information, detailed history information and basic information edit,
said method being characterized by comprising the steps of:
shifting the screen from the basic text screen, basic image screen, latest information screen, or term management screen to the detailed history screen,
shifting the screen from the basic text screen, basic image screen, latest information screen, or term management screen to the basic information edit screen, and/or
shifting the screen from the detailed history screen to the basic information edit screen.

Said shifting one screen to another among the basic image screen, basic text screen, term management screen, latest information screen, detailed history screen, and basic information edit screen is carried out by a pull-down system.

The method comprises the step of retrieving, re-arranging, task interrupting and canceling the interruption of resultant data displayed on the basic image screen, basic text screen, term management screen, latest information screen and detailed history screen.

The method comprises the step of shifting the basic image screen to the basic information preparation screen, basic information edit screen, history preparation screen or detailed history screen.

The method comprises the step of shifting the basic text screen to the basic information preparation screen, basic information edit screen, history preparation screen or detailed history screen.

The method comprises the step of shifting the term management screen to the detailed history screen.

The method comprises the step of shifting the latest information screen to the history preparation screen or detailed history screen.

On said basic information edit screen, the basic information is newly registered and edited, edit of the basic information is deleted, and keywords are edited.

On said basic information edit screen, basic information edit is carried out by executing an edit button after selecting a checkbox of the task item to be edited.

The method comprises the steps of preparing the first new history information screen on which a predetermined status business task is carried out with respect to one task item, and preparing the second new history information screen on which the relevant business task schedule is managed by automatically calculating the next task on the basis of the arbitrary status on said history preparation screen.

The method comprises the step of shifting the screen from the basic text screen, basic image screen, or latest information screen to the new history preparation screen.

The step of the detailed history includes the step of history edit, and the history edit is carried out by checking the checkbox of the list of basic information history.

The file pertaining to the history is attached to the history screen.

The method comprises class normal screen, class international reduction screen, and update management screen.

The method comprises the step of shifting the screen from the class normal screen, class international reduction screen, and update management screen to the detailed history screen.

The method comprises the step of shifting the screen from the class normal screen or class international reduction screen to the keyword edit screen.

The results are the management and control of trademarks.

The results are the management and control of patents.

An apparatus for optimally executing business tasks by using the respective display screens of the basic image information, basic text information, term management information, latest information edit, and history information, said apparatus being characterized by comprising:
a computer apparatus provided with a device of shifting the screen from the basic text screen, basic image screen, latest information screen and term management screen to the
detailed history screen, a device of shifting the screen from the basic text screen, basic image screen, latest information screen and term management screen to the basic information edit screen, and/or a device of shifting the detailed history screen to the basic information edit screen; and a communication device for making the respective information screens shared between persons in charge in a
company and agents and transmitting information so as to execute optimal business tasks in the common business task environments.

Said computer apparatus is provided with means for shifting the basic image screen to the basic information preparation screen, basic information edit screen, history preparation screen, or detailed history screen; means for shifting the basic text screen to the basic information preparation screen, basic information edit screen, history preparation screen, and detailed history screen; means for shifting the term management screen to the detailed history screen, and means for shifting the latest information screen to the history preparation screen or detailed history screen.

The basic image screen, basic text screen, term management screen and latest information screen are provided with a menu field and a basic information data list field.

Said detailed history screen is provided with a menu field and a basic information history list.

Said detailed history screen is provided with a basic information field and a detailed history information field.

Said history preparation screen is provided with a first new history preparation screen and a second new history preparation screen, the first new history preparation screen being provided with a field of the basic information of a task item, a field where task items of the new history preparation are input and selected, and a field for the existing detailed history.

Said first new history preparation screen is provided with fields for entering the date of occurrence, addresses pertaining to FROM/TO, selecting staff in charge of document preparation, selecting the type of documents, and selecting status supplements, and
said second new history preparation screen displays the contents confirmed on the previous screen, and is provided with the present history and information pertaining to the new business task.

Said history preparation screen is further provided with a subsequent history preparation screen.

Said latest information edit screen is provided with a field for basic information selected from the basic images, basic texts, latest information and term management.

The menu field of said basic image screen is provided with features including selection of data group and screens, data display screen selection, data display screen selection, data display screen selection, data display screen selection, simple retrieval, default conditions, first cancellation, main menu, log out, registration certificate printing, downloading, inquiry, reset, page selection, page jumping, and help.

The menu field of said basic text screen is provided with features including selection of group and screens, data display screen selection, data display screen selection, data display screen selection, data display screen selection, simple retrieval, default conditions, first cancellation, main menu, log out, registration certificate printing, downloading, inquiry, reset, page selection, page jumping, and help.

Menu field of said latest information screen is provided with features including selection of data group and screens, data display screen selection, data display screen selection, data display screen selection, data display screen selection, simple retrieval, default conditions, first cancellation, main menu, log out, registration certificate printing, downloading, inquiry, reset, page selection, page jumping, and help.

The menu field of said term management screen is provided with features including selection of data group and screens, data display screen selection, data display screen selection, data display screen selection, data display screen selection, simple retrieval, default conditions, first cancellation, main menu, log out, registration certificate printing, downloading, inquiry, reset, page selection, page jumping, and help.

Said menu field of said detailed history (basic information) screen is provided with features including selection of data group and screens, data display screen selection, data display screen selection, data display screen selection, data display screen selection, simple retrieval, default conditions, first cancellation, main menu, log out, registration certificate printing, downloading, inquiry, reset, page selection, page jumping, and help.

The menu field of said detailed history (history information) screen is provided with features including selection of data group and screens, data display screen selection, data display screen selection, data display screen selection, data display screen selection, simple retrieval, default conditions, first cancellation, main menu, log out, registration certificate printing, downloading, inquiry, reset, page selection, page jumping, and help.

### Description of the Present Invention

In the invention; enterprise, business task and role are understood as follows; that is, a collection of roles is a business task, and a collection of business tasks is an enterprise.

A conceivable business task is assigned with a keyword. The corresponding keyword and/or attributes thereof are expressed after being replaced by symbols. The keyword is constructed so that respective business tasks are classified in compliance with the enterprise to be expressed, and are provided with attributes. Thus, the business tasks and roles are provided with keywords, whereby these are simplified and unitized.

Hereinafter, one example of a status keyword that can be utilized will be described.
Type of information = application of a trademark, status = under application, supplementary status = Office Action, availability of use or accessibility = common (all the related members can use a display screen. But, some detailed business tasks of a certain status are accessible only by specified members), status detail = notice of the reason for rejection, instruction against the reason for rejection, filing of a written argument with respect to the rejection, receipt of communication corresponding to a rejection, notice of rejection decision, instruction corresponding to the rejection decision, submittal of appeal judgment with respect to a rejection decision, and receipt of a communication corresponding to the rejection decision.

Keywords are assigned to all business tasks pertaining to the types of information, status, supplementary status, and status detail. However, in a case where a business task other than the business tasks pertaining to the detail of already registered statuses arises, a new keyword is assigned to a business task related to the detail of a new status, and the new keyword will be registered upon approval by other concerned persons.

The aforementioned keyword is assigned with the following attributes and information. That is, the keyword is provided with information regarding an individual capable of doing the corresponding business task, an individual authorized to approve the executed business task, an individual capable of accessing and reading the contents of the corresponding business task, and an individual capable of doing a business task which comes after the corresponding business task, with along with information about respective business tasks. Further, the keyword is provided with an attribute that permits the use of a display screen, an attribute of business task competence, an attribute of power to access a display screen, an attribute of organizations and/or individuals who are capable of use, an attribute about difficulty and facility of business tasks, an attribute of business task risk, an attribute related to a time-series changes in a business task, an attribute of special situations, and information on other screens relevant thereto. It is preferable that the keyword is provided with at least one, and preferably five of the aforementioned attributes and information.

In case a business task relates to acquisition of a trademark right, the keyword is constructed of four levels.
1. Type of information = keyword which classifies enterprise and information pertaining to trademark application, change of applicant, memorandum, etc.,
2. Status = keyword summarizing and categorizing a supplementary status,
3. Supplementary status = keyword summarizing and categorizing the details of status, and
4. Details of status = keyword briefly expressing actual business task and incidents.

The aforementioned keywords are assigned to letters, and each of the corresponding letter is assigned with attributes classified into items to be expected to be sorted, and/or attributes of means for transmitting the letter.

The display screens are a basic image screen, a basic text screen, a class normal screen, a class international reduction screen, a term management screen, a renewal management screen, and a detailed history screen. Respective buttons on the menu column of the respective display screens are sorted into five colors, and the features of the respective buttons are as follows;
Blue: Button to shift to the main display screen, a retrieval display screen and a display screen related to certificates of registration.
- Basic image: shift to the basic image screen.
- Class normal: shift to the class normal screen.
- Term management: shift to the term management screen.
- Simplified retrieval: shift to the simplified retrieval screen.
- Go>: shift to a data group selected from a Pull-down menu, and the screen.
- Close the certificates of registration: Close the screen of certificates of registration.
- To thumbnail: The screen of certificates of registration shifts to its thumbnail image.
Green - Button to cancel extraction of cases, and to shift other display screens
- Main menu: shift to the main menu.
- Log-out: log out from the corresponding database.
- Go>: Execute a favored retrieval condition selected from a Pull-down menu.
- Default: The extraction is returned to the default (that is, the extraction conditions when being logged in).
- 1 cancel: cancel the latest extraction only once. Yellow - Function buttons
- Registration certificate print: collectively print out the certificates of registration.
- Download: download displayed data of a collective display screen in the format of CSV.
- Inquiry: Shift to an inquiry database.
- Reset: reset the state or a normal state where an error occurs or no synchronization becomes secured.
- Help: start the corresponding database help system.
- Detailed print: print out basic information of a detailed history screen.
Red - Page shift button
- <NEXT: return the table by one page.
- Next>: advance the table by one page.
- PageGo>: shift to an inputted page number.
Pink - Buttons related to history
* <NEXT: return the table of history by one page.
* NEXT>: advance the table of history by one page.

- PageGo>: shift to an inputted page number.
- Cancel All histories: cancel extraction of all histories documents, and display all the history documents.
- Cancel 1 History: cancel extraction of the history documents by only one time.

Terms and words used here in the invention will be explained below:

SUB language: This means another language to alter only the specified items in the description in the database.

Anchor: This means a hyper link. If it is clicked, the screen shifts to an appointed screen.

Thumbnail screen: This is a screen which can display a plurality of display screens at a small size in the form of a list.

Data group: Collections of cases managed in groups such as patent, trademark, design, license, copyright, and the entirety, and other data.

Default: This indicates the initial conditions which the database establishes as defaults.

Collective editing: One item for which a plurality of data are set is edited to be the same value or a different value by a series of operations.

Class International Reduction: The local classification of a case is reduced to the international classification.

Designated goods/service keyword: A keyword is assigned to designated goods/service, which designates a case when filing an application or registering.

Designated goods/Service keyword master: This is a master screen for collectively managing the register designated commodities/services (keywords).

Next enterprise: This points out the next enterprise to be executed next after the present given enterprise is completed.

Default: By clicking the default button, the table screen is returned to an extraction screen effected when logging in. On the detailed history screen, all the data of the histories are displayed.

Continued history: This points out histories of the existing histories, wherein a plurality of child histories can be prepared per parent history.

### BRIEF DESCRIPTION OF THE DRAWINGS

FIG. 1 is a sketch showing a method for optimally achieving business tasks according to the invention;
FIG. 2 is a view showing the first screen for preparing a new history according to the invention;
FIG. 3 is a view showing the second screen for preparing a new history according to the invention;
FIG. 4 is a view showing a file attached to the second screen for preparing a new history according to the invention;
FIG. 5 is a view showing the contents inputted in the first and the second screens for preparing a new history according to the invention;
FIG. 6 is a view showing the first screen for preparing a continuous history according to the invention;
FIG. 7 is a view showing the second screen for preparing a continuous history according to the invention;
FIG. 8 is a view showing the contents inputted in the first and the second screens for preparing a continuous history according to the invention;
FIG. 9 is a view showing a simplified retrieval screen according to the invention;
FIG. 10 is a view showing a detailed retrieval screen according to the invention;
FIG. 11 is a view showing a detailed history screen according to the invention;
FIG. 12 is a view showing a basic image screen according to the invention;
FIG. 13 is a view showing a basic text screen according to the invention;
FIG. 14 is a view showing the newest information screen according to the invention;
FIG. 15 is a view showing a term management screen according to the invention;
FIG. 16 is a view showing a matrix preparation setting screen according to the invention;
FIG. 17 is a view showing a matrix display screen according to the invention;
FIG. 18 is a view showing a map according to the invention;
FIG. 19 is a view showing a detailed history screen according to the invention;
FIG. 20 is a view showing transitions related to the detailed history screen,
FIG. 21 is a view showing the first screen for preparing a new history according to the invention;
FIG. 22 is a view showing the second screen for preparing a new history according to the invention;
FIG. 23 is a view showing the second screen for preparing a continuous history according to the invention;
FIG. 24 is a view showing a history editing screen according to the invention;
FIG. 25 is a view showing transitions related to the basic information editing screen;
FIG. 26 is a view showing the basic information editing screen according to the invention; and
FIG. 27 is a view showing the basic information editing screen according to the invention.

### PREFERRED EMBODIMENT OF THE INVENTION

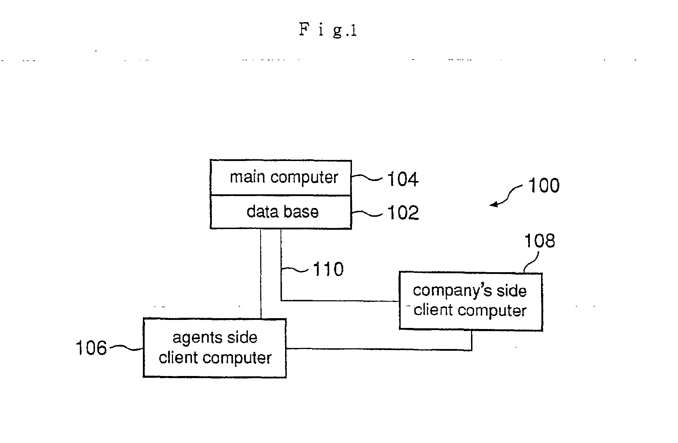

In the embodiment, the basis of an example of trademark management will be described. FIG. 1 is a schematic view for showing an apparatus for optimally executing business tasks, which executes a method for optimally executing business tasks according to the invention.

A system 100 that achieves a method for optimally achieving business tasks according to the invention is provided with a main computer 104 equipped with a database 102 in which information for optimally executing business tasks is stored, a client computer 106 at an agent's side, which is used to access the main computer 104, and another client computer 108 at a company's side, wherein the main computer (for example, web server) and respective client computers (for example, terminal computers) are connected to each other by transmission lines 110 (for example, HTTP system or HTTPS system). Therefore, the attorney and the company are placed in the same environment.

The aforementioned database stores basic image information, basic text information, class normal information, class international return information, term management information, renewal management information, the latest information, detailed history information, basic information editing information, business task keywords, and software for optimally achieving business tasks, using these types of information.

Hereinafter, history screens used in the embodiment is described referring to the accompanying drawings. The history preparation screen has a new history preparation (1) screen and a new history preparation (2) screen. The new history preparation (1) and (2) screens are provided with the basic information column located at the upper section, and a role item column of the new history preparation (1), which is located at the lower section.

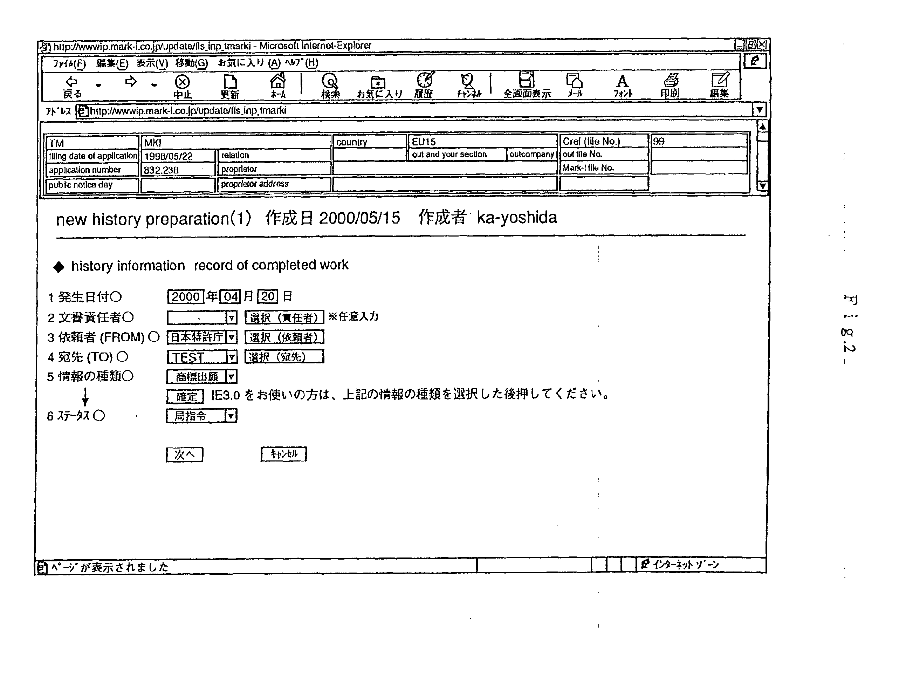

FIG. 2 shows a new history preparation (1) screen. The corresponding new history preparation (1) screen is provided with a basic information column located at the upper section and a role item column of new history preparation, which is located at the middle section. Herein, [date of letter arrival] is inputted into the [date of occurrence] . [Japanese Patent Office] is selected for [FROM (a client)], arid an office name [TEST] is selected for [TO (an address)]. A keyword corresponding to [Trademark Application] is selected from [Types of information]. A keyword [Office Action] corresponding to the present state of progression is selected from [Status].

Hereinafter, terms used in the corresponding display screens will be explained.

History preparation: To record enterprise/role generated with respect to the trademark right expressed in the upper section, which is referred to as history preparation.

Continuous history preparation: To record enterprise generated with respect to the history selected on the detailed history screen is recorded.

History preparation screen: This is a screen for inputting or selecting when and from whom/to whom a generated enterprise/role shifts, what the type of the enterprise is (type of information), and what state the right or role is.

Date of generation: This is a screen for inputting the date when an enterprise/role occurs. The default is the data of having prepared data. The latest state of rights (supplementary status) of a trademark right displayed on the respective table screens is calculated and reflected from the date of generation and [type of information].

Responsible person: A person responsible for the history (recording of enterprise) is selected (in the case where he or she is different from the person who actually prepared the data).

Selection(responsible person) button: Press the button for referring to a table of address master.

FROM (client): Select the source transmitting the history information (recording of enterprise).

Selection (client) button: Press the button for referring to a table of address master.

TO (address): Select the address to which this history information (recording of enterprise) is transmitted.

Selection (Address) button: Press the button when wanting to refer to a table of address master.

Type of information: Select a keyword expressing the type of information on the generated enterprise or role.

Enter button: Press this button where no action (rereading) occurs when selecting the type of information.

Status: Select the keyword expressing the progress of a generated enterprise/role.

NEXT: Press the button to shift the screen to the next history preparation screen (2).

CANCEL: This makes the history preparation invalid, and the screen returns to the original screen before shift.

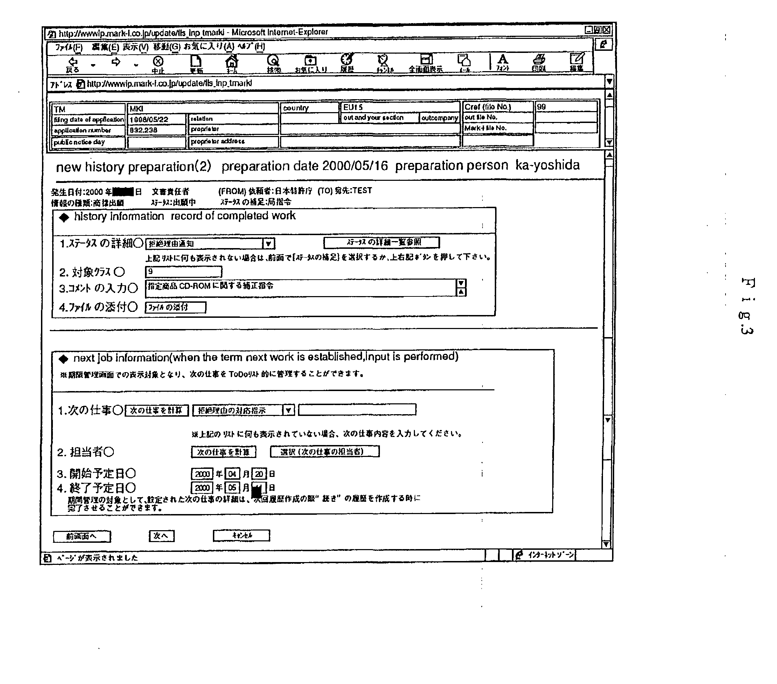

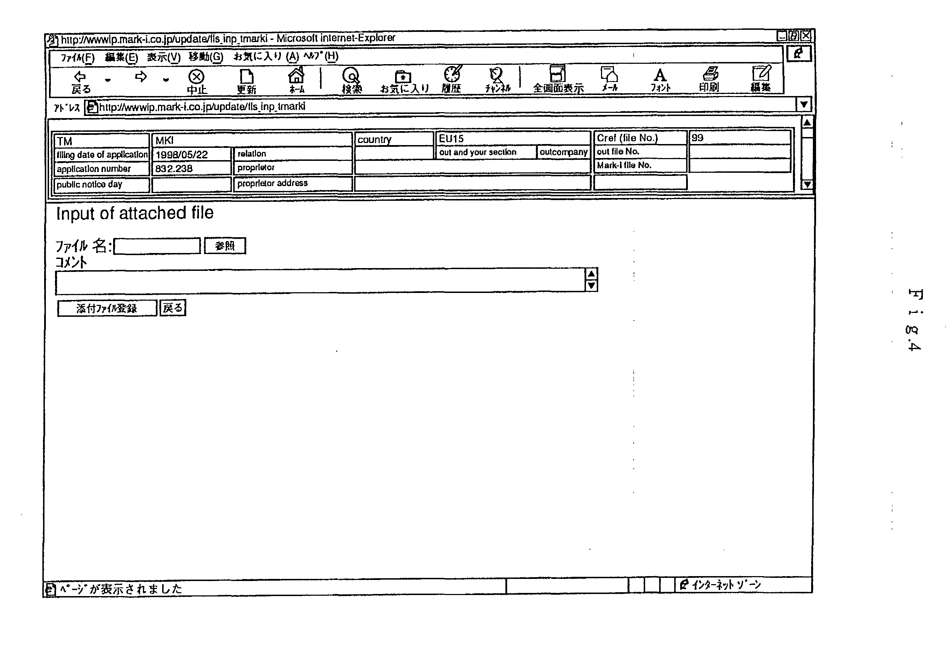

FIG. 3 shows the history preparation screen (2). The new history preparation (2) screen is provided with a basic information column located at the upper section, and a role item column for new history preparation, which is located at the middle section. A keyword [Notice of the reason for rejection] of an actually detailed level of enterprise is selected for the [Detailed status] in the history information column. The class to be amended is inputted in the [Objective Class]. [Instructions pertaining to designated goods CD-ROM] as detailed contents is inputted in the [Comment]. Since there is a desire for the material transmitted by facsimile to be electronically filed, a [File Attaching] button is pressed to change the screen to that for attaching the file so as to be attached to the history as a material (See FIG. 4).

[Next enterprise calculate] is pressed in the detailed column of the next enterprise, enterprise (detailed status), which is conceivable to occur next, is displayed with respect to the present enterprise (details of status). The keyword [Instruction corresponding to reason for rejection] of the enterprise to be subsequently executed is selected. A client name [fujimoto] company, for which an instruction for the response is given by a [person in charge], is selected. Today [20000420] is inputted in the [Planned date of commencement] in order to receive an actual response in the duration from today until the statutory term, and [20000510] is inputted in the [Planned date of termination] in order to receive an instruction one day before the term.

Hereinafter, terms used in the corresponding display screen will be described.

History preparation screen 2:
1. The detailed information of the generated enterprise/role is described,
2. Information to manage the subsequent enterprise/role is inputted.

Date of generation/ Responsible person/ FROM (Client)/ TO (Address)/Type of information/ Supplementary status: Values inputted and selected on the precedent screen are displayed.

Status detail: A keyword expressing the generated enterprise/role is selected. In the case where no adequate keyword is provided in the list, [Reference button of a detailed status table] is pressed.

Reference button of status detail list: The screen shifts to a screen of history keyword master (where it is possible to prepare and re-select keywords).

Objective class: To be input when the content of history to be recorded if it belongs to a specified class (That is, in the case where an Office Action is issued for the specific class in multiple applications).

Input of comment: Input detailed contents of enterprise to be recorded.

Button for attaching a file: Press the button if there is a file desired to be attached (Any type of file): If there are a plurality of attached files, they are registered only by the number of execution.

Information of the next enterprise: When the present enterprise is recorded, there is a case requiring subsequent enterprise to be done. In the information of the next enterprise, the enterprise occurring next is inputted, and the term from when the enterprise must be commenced and until when it must be finished is established, whereby information to manage the term is input. If there is no need to manage the next enterprise, inputting is not required.

Next enterprise calculation button: A keyword (Status detail) conceivable as the next enterprise is calculated, and the next enterprise is displayed.

Next enterprise: The next enterprise to be set is selected. If it does not exist in a list, the next enterprise is inputted in a text box at the right side.

Person in charge: An organization or an individual in charge of the next enterprise to be set is selected.

Address selection (Next enterprise) button; press the button when the address master list is referred to there is a desire to refer to a table of address master.

Planned date of commencement: The desired date on which commencement of the next enterprise to be set is inputted. When setting the date to any one of the planned dates of commencement or termination, term management is enabled on the term management screen.

Planned date of termination: The date on which the next set enterprise is desired to be terminated is inputted. When setting the date to any one of the planned date of commencement or termination, term management is enabled on the term management screen.

Completion of enterprise: The information of the next enterprise which is set as an object of the term management can be completed when preparing the continuous history in the next history preparation. Upon completion, the information of the enterprise is excluded from the objects of the term management, and no longer displayed on the term management screen.

Last page button: The display screen is returned to the last page (history preparation screen (1)) by pressing the button.

NEXT button: The screen shifts to a check screen of history preparation.

CANCEL button: The history preparation is cancelled and the screen is returned to the original screen.

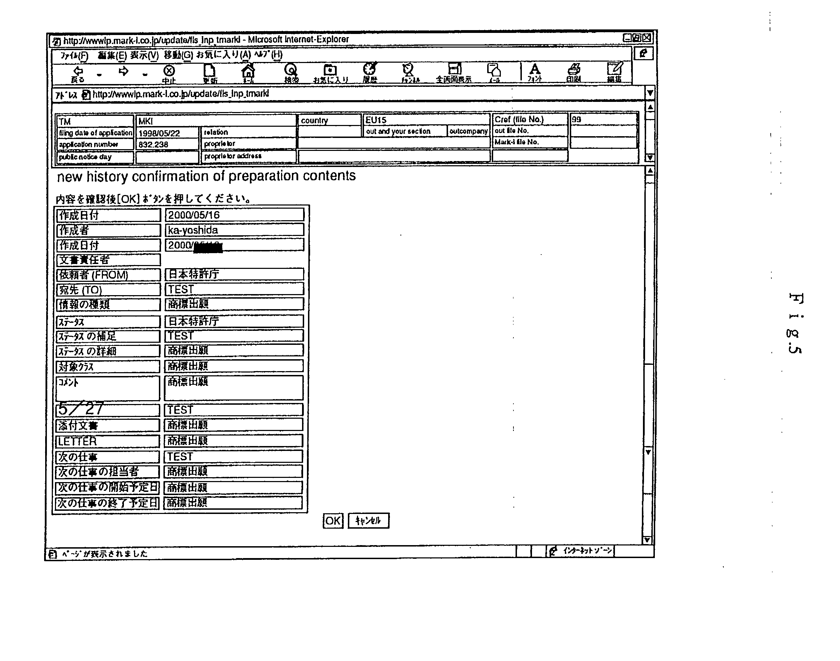

FIG. 5 shows a check screen to make a check (Date of occurrence, FROM, TO, Type of information, Status, Supplementary status, Status detail, Objective class, Comments, Availability of attached documents, NEXT enterprise, A person in charge of the next enterprise, Planned date of commencement, and Planned date of Termination) which have been inputted in the history preparation screen (1) and history preparation screen (2).

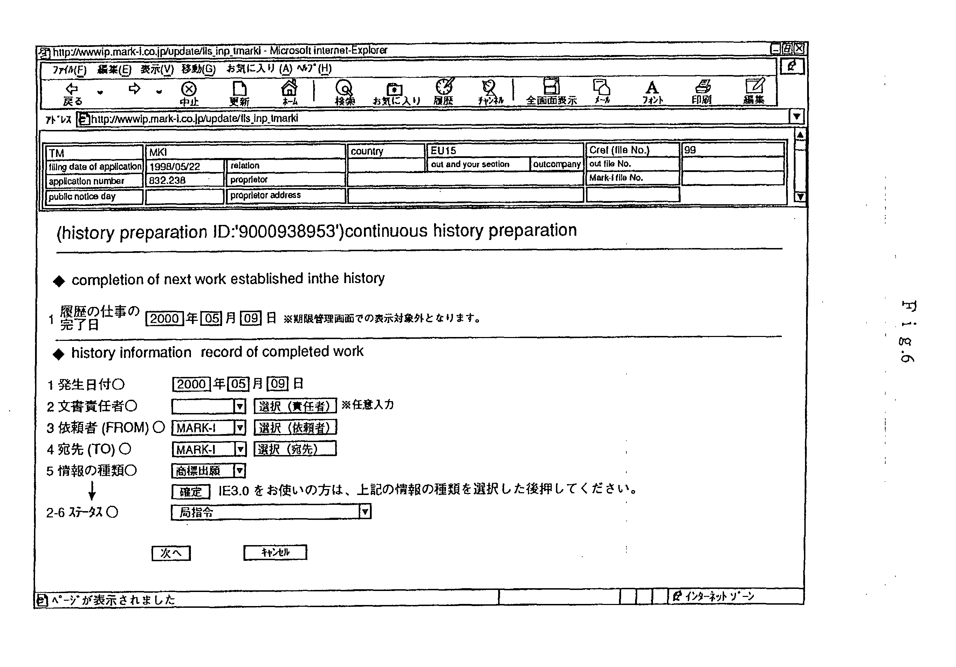

FIG. 6 shows a continuous history preparation screen (1). This drawing shows how the original history information and information of enterprise occurred at present is inputted.

### Continuous history preparation screen (1)

Original history information: This is information on the source for preparing the continuous history.

1. The date of completion of enterprise set in the source history is entered.

History information: This is information on an enterprise/roles that have occurred. In this section, the enterprise/roles are entered in detail. The date of occurrence, person in charge of record, FROM (client), TO (address), Type of information, Status, and Supplementary status are inputted.

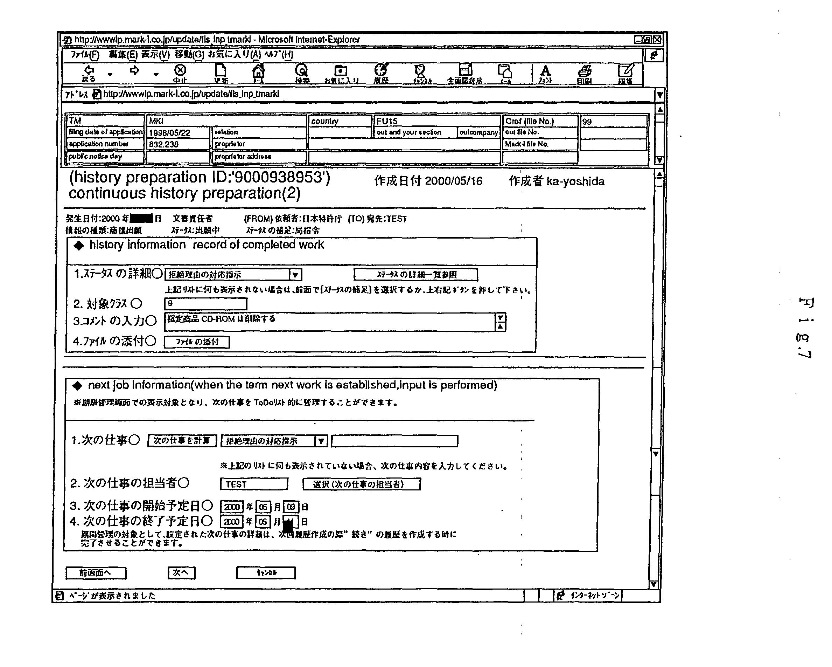

FIG. 7 shows a continuous history preparation screen (2). This drawing shows how the history information is inputted.

Continuous history preparation screen (2)
1. Detailed information of enterprise/role that occurred is entered.
2. Information to manage the enterprise/role occurring next is inputted.
Completion of enterprise: Information on the next enterprise set as the object of term management may be completed when preparing the continuous history in the next history preparation. Upon completion, the information is excluded from the object of term management and no longer displayed. That is, the keyword [Instruction corresponding to a reason for rejection] that relates to the detailed actual level of enterprise is selected for the [Status detail]. A class that became an object of amendment is inputted in the [Objective class]. A detailed content [Designated product CD-ROM is deleted] is inputted in the [Comment].

Pressing the [Calculate the next enterprise] button, enterprise (Detailed of status) conceived to occur next in relation to the enterprise (Status detail) occurred at present is displayed. The keyword [File a written argument with respect to the reason for rejection] of enterprise to be executed next is selected. A [TEST] patent attorney office is selected to cause the person in charge of filing the response to the PATENT OFFICE. In order to file the countermeasure on a date before the legal term, today [20000509] is inputted in the [Planned date of commencement), and the due date [20000511] is inputted in the [Planned date of termination].

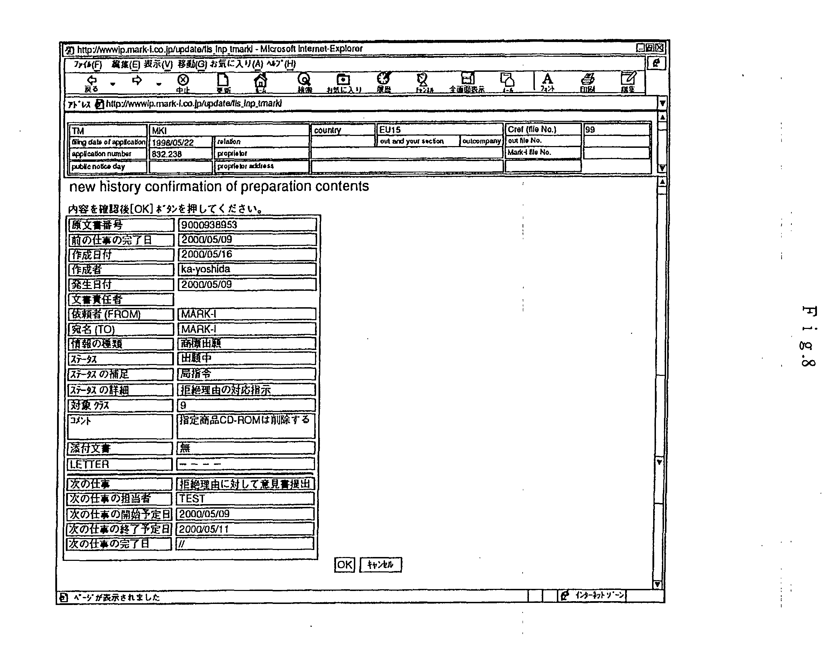

FIG. 8 is a check screen (Date of occurrence, FROM, TO, type of information, status, supplementary status, status detail, objective class, comment, availability of attached document, next, enterprise, a person in charge of the next enterprise, planned date of commencement, and planned date of enterprise) that have been inputted in the continuous history preparation screen (1) and continuous history preparation screen (2).

Hereinafter, the description is given of a method for optimally executing business tasks with respect to acquisition of a trademark right on the history screens.

First, checking and selecting a favored case in the basic image screen are carried out, and by clicking the history preparation button, the screen shifts to the new history preparation (1) screen. Next, the basic information summary of the case whose history is being prepared is displayed on the upper section, and a screen for inputting and selecting role items for preparing a new history is displayed on the lower section. On the lower section screen, the address selection (FROM) button is clicked in order to input an address in the (FROM) to express from whom an action is made with respect to the status, date and preparing history.

Next, the screen shifts to the screen of the address list, wherein, checking a radio button located at the left side of information of a selecting address and clicking the selection, the screen returns to the new history preparation (1) screen, and the selected address information is inputted in the (FROM). Next, clicking the address selection (TO) in order to input to whom the action is made in the (TO), the aforementioned operations are repeated. Next, trademark application is selected from the keyword selection pull-down menu that becomes a type of information in the history screen, and another keyword that becomes a supplementary status is automatically displayed. An Office Action is selected from the pull-down menu, and preparation is clicked.

Next, a keyword to express the status detail is selected from the keyword selection pull-down menu in the new history preparation (2) screen. If no desired keyword exists in the pull-down menu, the reference button of a detailed list of status is clicked to shift the screen to a reference and selecting screen for the list of other keywords. Next, an objective class is inputted to display to which class the preparing history corresponds (in order to clarify to which class the history is prepared where the case has a plurality of classes).

Next, a comment is inputted with respect to preparing history document. Also, a file related to the history may be attached to the history. If there is no file to be attached, the screen shifts by clicking [OK]. Clicking registration of an attached file, the screen shifts to the screen for registration of the attached file. And, a file selection window is displayed by clicking "reference" to designate an attached file. A comment is inputted with respect to the attached file, and the screen returns to the new history preparation (2) screen by clicking the attached file registration.

Next, a button to calculate the next enterprise is clicked. The next enterprise is automatically calculated on the basis of the selected keyword, and it is displayed in the pull-down menu. In this case, an instruction on a countermeasure for the reason for rejection is selected. Next, an address selection (next enterprise) is clicked to input the person in order to show the person in charge of the next enterprise.

Next, the planned date of commencement and planned date of termination are inputted.

Clicking the NEXT button in the new history preparation (2) screen, the screen shifts to a screen for checking the detailed history preparation. After checking the contents, click the OK button, and preparation of a new history is executed, and the screen further shifts to a screen for preparing a detailed history.

Hereinafter, a description is given of a method for optimally achieving business tasks according to the invention, using one example of an enterprise that has occurred.

[TEST] patent attorney office received an Office Action on the date coded as [20000420]. It related to amendment regarding the designated goods of a trademark application (File No. XXXXX) of the Fujimoto Company. The due date of the response to the Governmental Patent Office was coded as [20000511].

First, a person at the [TEST] patent attorney office prepared a record of receiving the Office Action. That is, the corresponding person started a terminal computer and connected it, via the Internet, to a server computer in which a database assigned with information to optimally execute business tasks is stored. And, the person opened a log-in screen of the terminal computer and logged in by inputting the log-in name and password.

The screen for preparing the letter is opened. The general form of the letter is provided with the following items, such as the date of preparation, address, a person preparing the letter, file no. (FNO.), title, summary, and comment. The title and summary among those items are specified by the keywords.

"From business tasks registered in the database" is selected with respect to the keyword. Herein, if any business task that is not registered in the database occurs, a new keyword is prepared and registered. Also, in a case where a keyword is newly registered, the newly prepared keyword is examined and registered after it is corrected as necessary and approved by a third person.

The keyword is assigned with information about a person capable of executing the corresponding business task, a person authorized to approve the corresponding business task executed above, a person authorized to access and read the contents of the corresponding business task, and a person who executes a business task subsequent to the corresponding business task. Further, time management is carried out by calculating the time taken to complete the business task on the basis of the keyword.

In the aforementioned example, an Office Action stated in the supplementary status is entered in the title, and an action expressed by the supplementary status or an action regarding the Office Action (Reasons for rejection, written amendment, etc.,), which is stated in the status, is entered in the summary.

The corresponding keyword is inputted into an appointed frame on the screen for preparing a letter, and a letter of business tasks assigned to the corresponding keyword is obtained on the screen of a display. And, appointed items are entered in appointed frames on the screen for preparing the letter, whereby the letter is transmitted by clicking the button of a screen for transmitting the corresponding mail. Since the letter contains information on a person who carries out the next enterprise, it is automatically transmitted to the person who executes the next business task.

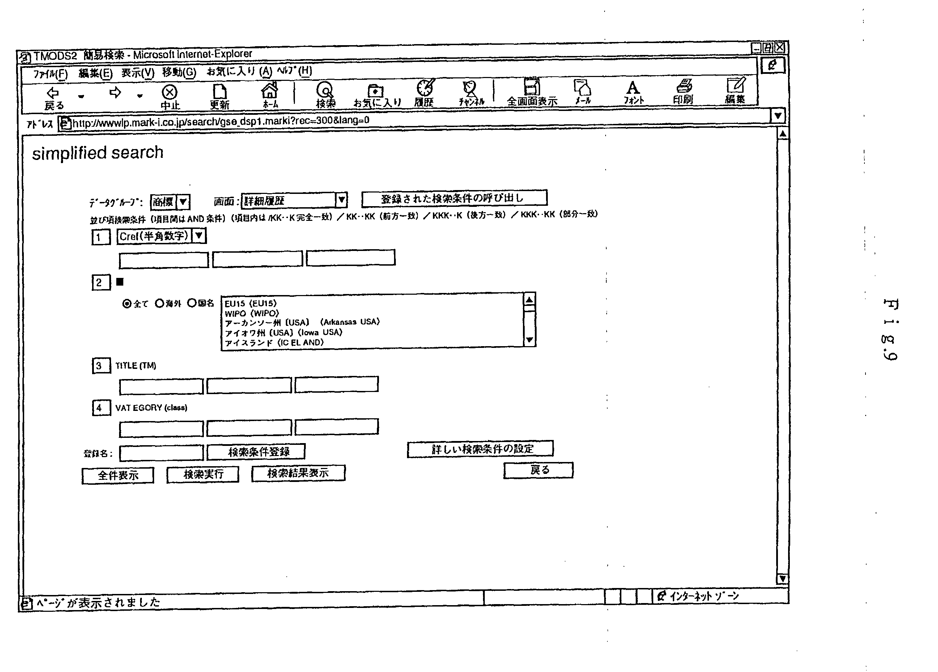

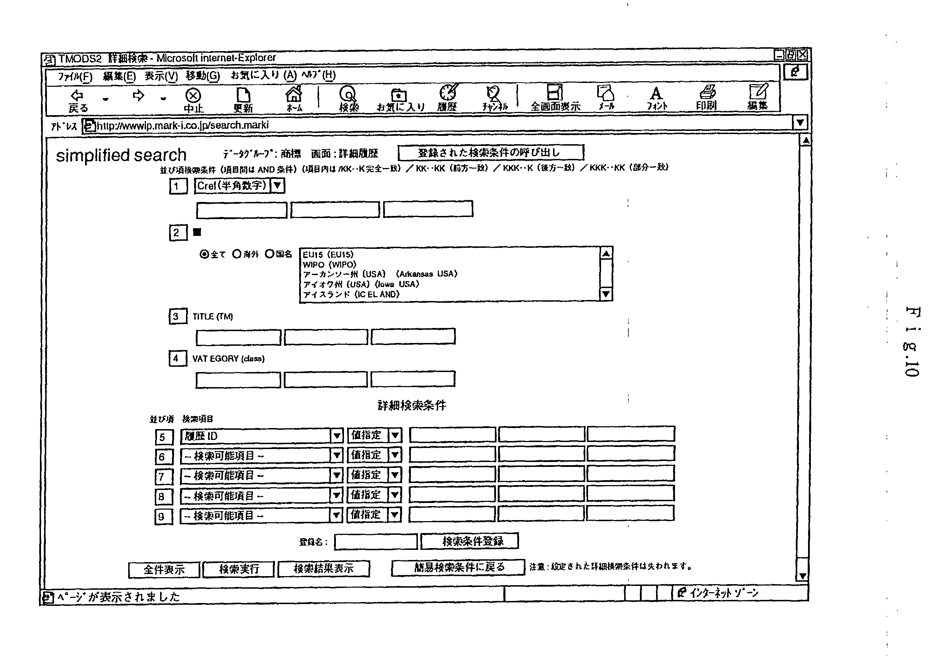

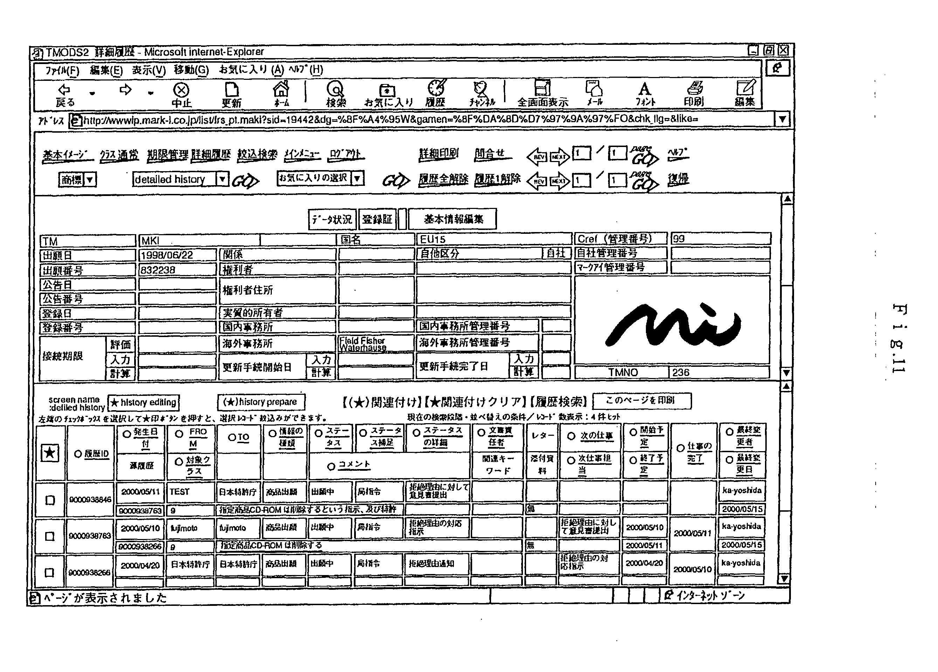

The person who receives a letter, etc., via E-mail, facsimile, telephone, etc., checks whether or not the letter relates to his/her (hereinafter called "his" ) own business task. If the business is the one that has to be done by him/her (hereinafter called "him"); [Start by an optional method] is pressed on the main menu on the log-in screen, and the screen is made to shift to a simplified retrieval screen (Refer to FIG. 9). [Trademark] is selected from the data group and a [Detailed history screen] is selected on the screen. Then, a button [Set the detailed conditions] is pressed. And, [File No.] is selected from the items of detailed retrieval conditions on the detailed retrieval screen (Refer to FIG. 10), and the file no. [XXXXX] is inputted. Further, a retrieval execution button is pressed. And, the screen shifts to the detailed history screen (Refer to FIG. 11).

If the letter does not relate to his own business task, the corresponding letter is sent back to the person who has transmitted the corresponding E-mail, facsimile or telephone.

Next, the person in charge presses a [history preparation] button in the lower section of the screen. Then the screen shifts to the new history preparation screen (1). History information is inputted in the new history preparation screen (1). That is, [date of letter arrival] is inputted in the [date of occurrence]. [Japanese Patent Office] is selected for the [FROM (Client)], and [TEST] is selected for the [TO (address)]. A keyword [Trademark Application] is selected from the [type of information]. A keyword [Office Action] corresponding to the present state of the progress is selected from the [Supplementary status]. And, the [NEXT] button is pressed.

Next, history information is inputted on the history preparation screen (2). A keyword [Notice of reasons for rejection] of the actually detailed level of enterprise is selected for the [status detail]. A class specified as an object to be amended is inputted in the [abjective class]. A detailed content [Action regarding the designated goods CD-ROM] is inputted in the [comment]. Since the material transmitted via facsimile is electronically filed, a [file attaching] button is pressed, whereby the screen is made to shift to the screen to attach the file, and the file is attached thereto as materials.

Information of the next enterprise is inputted. Since an enterprise (status detail) conceived to occur with respect to the presently occurring enterprise (status detail) is displayed by pressing the [Calculation of the next enterprise] button, a keyword of [Instruction for countermeasures against the reason for rejection] of an enterprise which is thought to be subsequently carried out is selected. A client's name [fujimoto] company for which an instruction is given from the person in charge is selected. In order to receive an actual reply within the term from today, today's date (20000420) is inputted in the [planned date of commencement] and [20000510] is inputted in the [planned date of termination] in order to receive an instruction one day before the due date. Then, the [NEXT] button is pressed.

Next, values (date of generation, FROM, TO, type of information, status, supplementary status, status detail, objective class, comment, availability of attached documents, next enterprise, person in charge of the next enterprise, planned date of commencement, and planned date of termination) inputted in the history preparation screen (1) and history preparation screen (2) are checked. If no problem exists, [OK] button is pressed. In case the inputted data (history) are registered and [To the detailed history screen] button is pressed, the values inputted in the detailed history screen can be checked. A history ID is issued with respect to the inputted data and is displayed.

Herein, the person in charge can obtain the letter preparation screen from the display screen. And, the corresponding keyword is inputted in an appointed frame in the letter preparation screen, and a letter of a business task assigned to the corresponding keyword is acquired on the display screen. Appointed items are entered into appointed frames in the letter preparation screen, and the letter is transmitted by clicking the corresponding mail transmitting screen button. The letter is automatically transmitted to a computer of a person in charge of executing the next enterprise.

The Fujimoto Company and the TEST patent attorney office are linked to the Internet, wherein the screen shift to the term management screen, and the inputted data are displayed. The data are displayed as an uncompleted enterprise (enterprise to be executed). Thus, the information can be commonly shared. If the TEST patent attorney office contacts the Fujimoto Company to inform them of the Office Action together with a [history ID=9000938953] when informing the Fujimoto Company of the Office Action, whereby the information can be commonly shared. The TEST patent attorney office indicates the history ID in the letter when in contact, and informs the Fujimoto Company of the instruction with respect to the response.

Therefore, the person in charge in the Fujimoto Company receives a letter that notifies the Office Action issued from the Governmental Patent Office on the date of 20000420 from the TEST patent attorney office. The content relates to the case with the history ID = 9000938953 indicating the problem of the [Designated goods CD-ROM].

The contents of the history ID=9000938953; the date of occurrence (date when communication was received); 20000420, from whom (FROM); TEST patent attorney office, to whom (TO); Fujimoto Company, type of enterprise (contents of letter); examination of a countermeasure against the Office Action, and the date of transmitting the countermeasure to the TEST patent attorney office; 20000510.

First, the person in charge in the Fujimoto Company opens the E-mail transmitted from the person in charge in the TEST patent attorney office to check the contents of the letter. After checking and confirming that no problem exists, the person in charge starts his terminal computer and connects it to a server equipped with the database storing information to optimally execute business tasks via the Internet. And he opens a log-in screen of the terminal computer. Next, he presses the button of [Start by an optional method] on the main menu of the log-in screen. The screen shifts to a simplified retrieval screen. And, the data group is set to [Trademark], and the [Detailed history screen] is selected on the screen. Also, he presses the button of [Set the detailed conditions]. A [History ID] is selected from items of the detailed retrieval conditions on the detailed retrieval screen, and [9000938953] is inputted. Next, the retrieval execution button is pressed.

[History ID=9000938953] is checked in the history portion in the lower section of the detailed history screen, and [History preparation] button is pressed. The screen shifts to continuous history preparation screen (1). Herein, the original history information is checked. In the checked history, the person in charge of the next enterprise = the Fujimoto Company, next enterprise = Instruction on a countermeasure corresponding to the reasons for rejection, and planned date of termination = 20000510 are set as an uncompleted enterprise (Next enterprise). That is, the enterprise is managed as an enterprise to be carried out at present. Since it becomes unnecessary to manage enterprise to be executed, which is already established in the original history with the contents that are to be recorded from now on, [20000510] that is the day before which the TEST patent attorney office is informed of a countermeasure is inputted in the date of completion of the enterprise in the history.

Next, history information is inputted. That is, [20000510] as the date on which the [TEST patent attorney office] is informed of a countermeasure is inputted in the date of occurrence. [Fujimoto Company] is selected for [FROM (Client)], and [TEST] of a patent attorney office is selected for [TO (addressee)]. A keyword of [Trademark application] pertaining to a trademark application is selected from the [Type of information]. A keyword [Office Action] corresponding to the present state of the progress is selected from the [Status]. And, the [NEXT] button is pressed.

The screen shifts to a continuous history preparation screen (2). Herein, history information is inputted. That is, a keyword [Instruction for a countermeasure against the reasons for rejection] on the actually detailed level of enterprise is selected for the [Status detail]. A class that became an object to be amended is inputted in the [Objective class]. A detailed content [Designated goods CD-ROM] is inputted in the [Comment].

Pressing the button [Calculate the next enterprise], since enterprise (Status detail) conceived to occur next with respect to the presently occurring enterprise (status detail) is displayed, a keyword [File a written argument for the reasons for rejection] of the enterprise to be executed next is selected. The [TEST] patent attorney office that informs the Governmental Patent Office of the countermeasure is selected for the [Person in charge]. Today's date [20000509] is inputted in the [Planned date of commencement] in order to file by the data of the legal term, and [20000511] as the legal term is inputted in the [Planned date of termination]. The [NEXT] button is pressed.

Next, the values ([Date of completion of enterprise] of history, date of occurrence, FROM, TO, Type of information, Status, Supplementary status, Status detail, Objective class, Comment, and Availability of attached documents) inputted in the continuous history preparation screen (1) and continuous history preparation screen (2) are checked. If there is no problem, [OK] is pressed. The inputted data (History) are registered. By pressing the button [To the detailed history screen], values inputted in the detailed history screen can be checked. History ID=9000938846 is established for the newly inputted history data. Also, [9000938953] is displayed in the point of the [Original history] of the data. It is devised that the history [9000938846] is the next occurring history after [9000938953] can be clearly understood. In addition, the date of completion of an enterprise of the [Original history] inputted in the continuous history preparation screen (1) can be automatically reflected to the date of completion of enterprise of the history ID=9000938953 (Original history).

Herein, the person in charge acquires a letter preparation screen on the display screen. And, the corresponding keyword is inputted in an appointed frame of the letter preparation screen, and a letter of a business task assigned to the corresponding keyword is obtained on the display screen of the display. And, appointed items are entered into appointed frames in the letter preparation screen, and the letter is transmitted by clicking the button of the corresponding mail transmission screen. The letter can be automatically transmitted to a computer of the person who executes the next enterprise.

The Fujimoto Company and the TEST patent attorney office connect their computers to the Internet to call the term management screen on which the inputted data are displayed. Thereby, the data are displayed as uncompleted enterprises (that is, enterprises to be executed) and are commonly shared.

Next, the person in charge in the TEST patent attorney office receives a reply for the countermeasure regarding the reason for rejection from the Fujimoto Company and responds to the Governmental Patent Office. That is, the TEST patent attorney office received the instruction to deal with the reason for rejection from the Fujimoto Company on the date 20000509 with respect to the history ID=9000938846. The content of the reply is to [Delete CD-ROM from the designated goods]. Therefore, the TEST patent attorney office prepared a written argument for the above case, and filed the corresponding written argument to the Governmental Patent Office.

The history ID = a new registered ID; The date of occurrence (Date responded to the Governmental Patent Office): 20000511, From whom (FROM): TEST patent attorney office, To whom (TO): The Governmental Patent Office, Type of enterprise (Content of the letter): Filing of a written argument with respect to the reason for rejection.

First, the person in charge in the TEST patent attorney office opens an E-mail letter transmitted from the person in charge in the Fujimoto Company and checks the content of the letter. After checking to confirm that no problem exists, the person in charge in the TEST patent attorney office starts a terminal computer and connects it to the server equipped with a database storing information for optimally executing business tasks via the Internet. A log-in screen of the terminal computer is opened. Next, the button [Start by an optional method] on the main menu of the log-in screen is pressed to shift to the simplified retrieval screen. Here, [Trademark] in the data file and [Detailed history screen] on the screen are pressed. Then, the button [Set the detailed conditions] is pressed. [History ID] of the detailed retrieval conditions on the detailed retrieval screen is pressed, and [9000938846] is inputted.

Next, he checks the history of [History ID=9000938846] in the detailed portion at the lower section of the detailed retrieval screen, and presses the button [History preparation] to shift to the continuous history preparation screen (1).

Here, the original history information is inputted. That is, on the basis of the checked history (original history), the party in charge of the next enterprise = TEST patent attorney office, the next enterprise = Filing of a written argument with respect to the reason for rejection, and the planned date of the next enterprise = 20000511 are inputted. This indicates that an uncompleted enterprise (next enterprise) has been established, that is, the TEST patent attorney office files a written argument with respect to the reason for rejection before the date of 20000511. That is, this is managed as an enterprise to be carried out at present. Since it becomes unnecessary to manage the enterprise that has been already established in the original history with the contents to be recorded onward, [20000511] as the filing date of the written argument to the Governmental Patent Office is inputted in [Date of completion of enterprise of the history].

Next, the history information is inputted. That is, [Date on which response was filed to the Governmental Patent Office] is inputted in the [date of occurrence]. [TEST] is selected for [FROM (Client)]. An office Name [Governmental Patent Office] is selected for the [TO (Address)]. A keyword [Trademark] is selected from [Type of information] because this case related to the trademark application. A keyword [Office Action] corresponding to the present state of the progress is selected from the [Supplementary status]. And, the [NEXT] button is pressed.

The screen shifts to the-continuous history preparation screen (2). Herein, history information is inputted. That is, a keyword [File a written argument with respect to the reason for rejection] corresponding to the actually detailed level of enterprise is selected for the [Status detail]. A class that became an object to be amended is inputted in the [Objective class]. A detailed content [Instruction to delete CD-ROM from the designated goods and file it to the Governmental Patent Office] is inputted in the [Comment].

With respect to the next enterprise information, since the TEST patent attorney office files the instruction from the Fujimoto Company to the Governmental Patent Office, there is no enterprise requiring term management. Therefore, this item is not established in this case, and the [NEXT] button is pressed.

Next, values (Date of completion of the previous enterprise, date of occurrence, FROM, TO, type of information, status, supplementary status, status detail, objective class, comment, and availability of attached document) inputted in the continuous history preparation screen (1) and continuous history preparation screen (2) are checked. If there is no problem, the [OK] button is pressed. The inputted data (history) are registered. As the button [To the detailed history screen] is pressed, it is possible to check the values inputted on the detailed history screen. A history ID=9000938900 is established in the newly inputted history data. In addition, [9000938846] is displayed in the frame of [Original history] of the data, whereby the history [9000938900] is devised such that a history occurred next after [9000938846] is clearly understood. In addition, the date of completion of the enterprise of [Original history] inputted in the continuous history preparation screen (1) is automatically reflected to the date of completion of the enterprise of the history ID=9000938846 (Original history).

The Fujimoto Company and the TEST patent attorney office connect to the Internet and shift to the term management screen, wherein no next enterprise (enterprise to be executed) of the already established history ID=9000938846 is displayed, and it is excluded from the objects to be managed.

It is possible to simply input two types of important contents in business tasks, which are the acquisition of enterprise records and term management of the next occurring enterprise (enterprise to be executed), and the information can be commonly shared.

The database for achieving a method for optimally executing business tasks stores basic image information, basic text information, class normal information, class international reduction information, term management information, renewal management information, newest information, detailed history information, basic information editing information, and software for optimally achieving business tasks using these types of information.

The basic image screen, basic text screen, class normal screen, class international reduction screen, and term management screen, renewal management information, and newest information screen are generally called "Screen for main lists". Further, the screens to which a detailed history screen is added is generally called a "main screen".

The respective screens display a menu column at the upper section, and a list of basic information data at the lower section.

The basic image screen 200 displays information necessary to grasp the outline of a case, wherein the case can be observed with an image of the corresponding trademark. From this screen, it is possible to shift to a screen for preparing a case, a basic information editing screen of the case, a history preparing screen, a screen to access and read certificates of registration, and a detailed history screen. The basic image screen is illustrated in FIG. 1. A description is given of types of buttons and the functions thereof in the main frame column of the respective screens in the corresponding drawing.

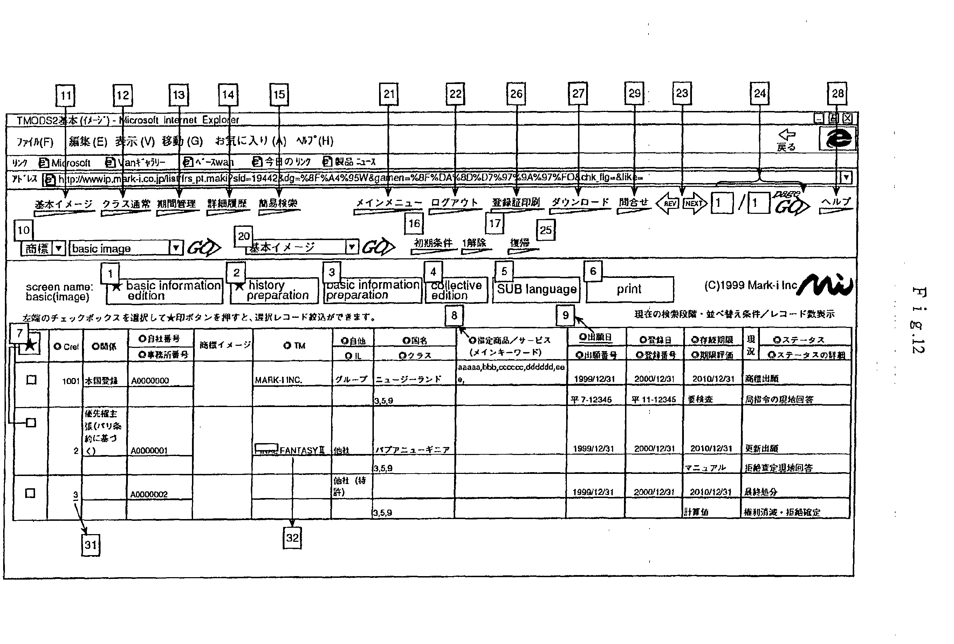

The basic image screen is described with reference to Fig. 12.

A reference numeral 1 indicates the basic information edition (shift to the basic information editing screen. Command: Button). A reference numeral 2 indicates history preparation (shift to the history preparing screen with respect to the basic information. Command: Button). A reference numeral 3 indicates basic information preparation (shift to the basic information preparation screen. Command: Button). A reference numeral 4 indicates collective edition (shift to a collective editing screen where parts of a plurality of basic information are collectively edited and universally replaced. Command: Button).

A reference numeral 5 indicates sub language change (Japanese-English expression change of items and a part of data. Command: Button). A reference numeral 6 indicates print (Printing of the information of pages expressing a table. Command: Button). A reference numeral 7 indicates execution of 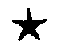 check box (select an optional record, and stop down the records by pressing the corresponding button. Command: Button). A reference numeral 8 indicates radio button retrieval (enables retrieval (partial coincidence) in the items in the corresponding display screen with respect to the present record set. Command: Radio button). A reference numeral 9 indicates item-by-item sorting (Sorting (ascending or descending order) of data on the display screen by anchor clicking of the items in the corresponding display screen. Command: Anchor).

A reference numeral 10 indicates data group/screen change (Select two pull-down menus on the DG/screen, press the [GO] button, and shift to the corresponding data display screen. Command: Pull-down + Icon). A reference numeral 11 indicates data display screen change [1. Basic image] (the shift to the data display screen used with high frequency is iconized, and by pressing the icon, the shift to the corresponding data display screen can be simply and quickly executed. Command: Icon). A reference numeral 12 indicates data display screen change [2. Class normal] (the shift to the data display screen used with high frequency is iconized, and by pressing the icon, a shift to the corresponding data display screen can be simply and quickly executed. Command: Icon). A reference numeral 13 indicates data display screen change [3. Term management] (the shift to the data display screen used with high frequency is iconized, and by pressing the icon, a shift to the corresponding data display screen can be simply and quickly executed. Command: Icon). A reference numeral 14 indicates data display screen change [4. Detailed history] (the shift to the data display screen used with high frequency is iconized, and by pressing the icon, shift to the corresponding data display screen can be simply and quickly executed. Command: Icon).

A reference numeral 15 indicates simplified retrieval (Shift to the simplified retrieval screen. Command: Icon). A reference numeral 16 indicates default (After being logged in by pressing the icon, the initial setting of retrieval conditions is achieved. Command: Icon). A reference numeral 17 indicates 1 cancel (Repeatedly cancel the stopping-down by the retrieval screen enabled with respect to the present record set and check box one by one. Command: Icon).

A reference numeral 20 indicates favored retrieval and sorting conditions (Retrieval and sorting conditions are registered in the simplified and detailed retrieval screens, wherein by selecting a retrieval registration name from the pull-down menu in the corresponding data display screen, the record setting of the corresponding data display screen can be simply and quickly changed. Command: Pull-down + Icon). A reference numeral 21 indicates the main menu (Shift to the main menu screen. Command: Icon). A reference numeral 22 indicates log-out (Shift to the log-out screen. At this time, the corresponding data display screen and record the setting immediately before the log-out are recorded, wherein by selecting [Continue from the last time] when logging in at the next time, the last role state can be easily made to reappear. Command: Icon).

A reference numeral 23 indicates page change (Shift to the preceding or subsequent page of the page being displayed at present. Command: Icon). A reference numeral 24 indicates page jump (By inputting the number of a desired page to a text box from the page displayed at present, and by pressing the button [Page GO], the shift to the corresponding page is enabled. Command: Icon).

A reference numeral 25 indicates reset (Function to reset the status to normal data display, which is previously stored, by pressing the [RESET] button when the screen display state (program coordination) becomes abnormal. Command: Icon). A reference numeral 26 indicates print of certificates of registration (Images of the certificates of registration of records selected in the check box can be collectively printed out without being displayed. Command: Icon). A reference numeral 27 indicates download (Download the record set, which is being extracted at present, in CSV format, and data editing is enabled so as to be freely loaded in application software used by a user).

A reference numeral 28 indicates help (Shift to the help screen. Help of the main menu shifts to the screen of table-of-contents screen of help. By pressing the button in statuses other than the above, another browser is started, and a help item based on the display screen contents for which the help button is pressed is displayed. Command: Icon). A reference numeral 29 indicates inquiry (When using the present system, a user records the contents of questions. Shift to the screen for a list of question contents, which displays the contents of replies, as a table. Command: Icon).

A reference numeral 31 indicates the display of certificates of registration (Shift to the thumbnail screen to display certificates of registration of the corresponding record by pressing a Cref data anchor on the screen of a list of data display. Shift from the detailed history screen to the screen of display certificates of registration by pressing a O-marked data anchor. Command: Data anchor). A reference numeral 32 indicates a shift to the detailed history screen (shift to the detailed history screen of the corresponding record by pressing a TM (trademark) data anchor of the screen for a list of data display. Command: Data anchor). The basic text screen displays information necessary to grasp the outline of a case, by which it is possible to look at the case without displaying the image of the trademark. From the screen, it is possible to shift to a preparation screen of the case, basic information editing screen of the case, history preparation screen, screen to access and read certificates of registration, and detailed history screen.

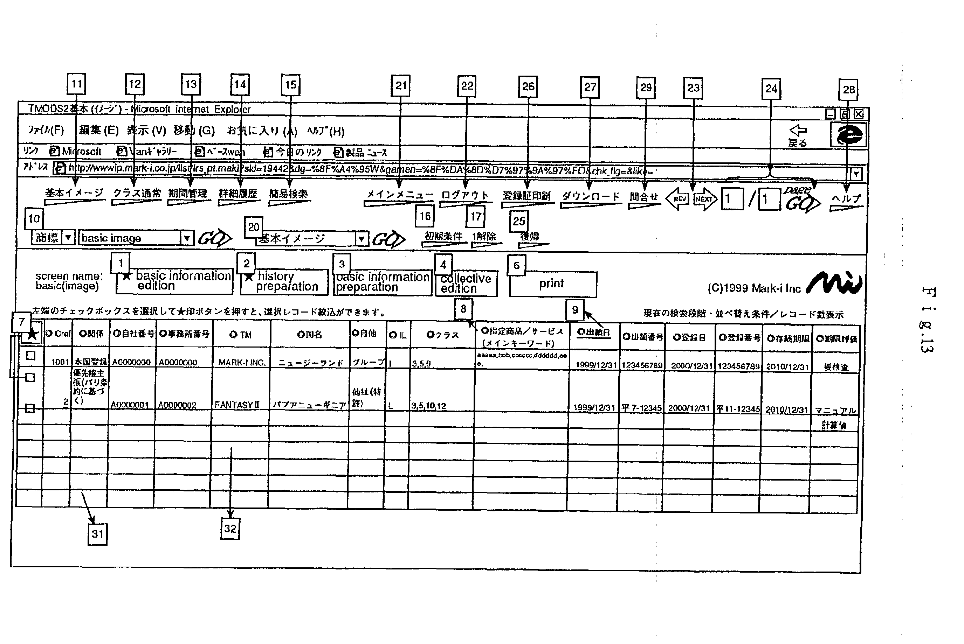

The basic text screen 300 is illustrated in Fig. 13. A description is given of types of buttons in the main frame column of the respective screens in the corresponding drawing, and the functions thereof. In addition, types of buttons, which are identical to those in the basic image screen, are given the same reference numerals, and overlapping description thereof is omitted.

Reference numeral 1: Basic information editing, Reference numeral 2: History preparation, Reference numeral 3: Basic information preparation, Reference numeral 4: Collective editing, Reference numeral 6: Print, Reference numeral 7: Execution of 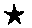 check box, Reference numeral 8: Radio button retrieval, Reference numeral 9: item-by-item sorting, Reference numeral 10: Data group and screen change, Reference numeral 11: Data display screen change [1. Basic image], Reference numeral 12: Data display screen change [2. Class normal], Reference numeral 13: Data display screen change [3. Term management], Reference numeral 14: Data display screen change [4. Detailed history], Reference numeral 15: Simplified retrieval, Reference numeral 16: Default, Reference numeral 17: 1 cancel, Reference numeral 20: Favored retrieval and sorting conditions, Reference numeral 21: Main menu, Reference numeral 22 : Log-out, Reference numeral 23 : Page change, Reference numeral 24: Page jump, Reference numeral 25: Reset, Reference numeral 26: Print of certificates of registration, Reference numeral 27: Download, Reference numeral 28: Help, Reference numeral 29: Inquiry, Reference numeral 31: Display of certificate of registration, Reference numeral 32: Shift to the detailed history screen.

The newest information screen can display the most recent state of progression of a case in the format of a list, which further displays the examination status of the present case and also displays information showing who should take over, what is to be executed, and by which day the execution is finished, etc. From the screen, it is possible to shift to the basic information editing screen of a case, the screen to access and read certificates of registration, the detailed history screen, and the screen for newly inputting a history.

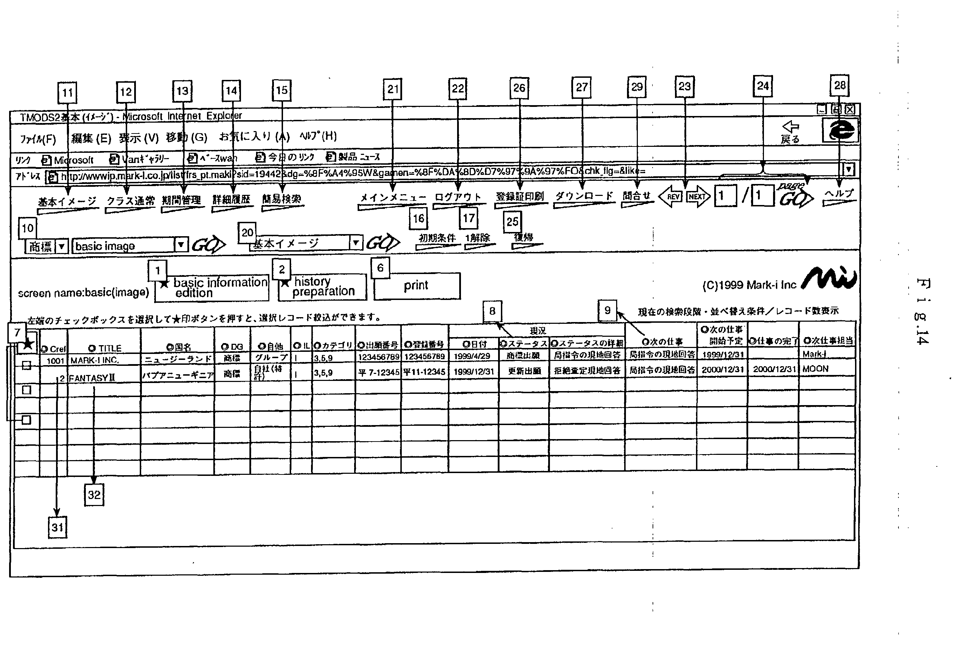

The newest information screen 400 is illustrated in FIG. 14. A description is given of the types of buttons in the main menu screen in the corresponding drawing, and functions thereof. Also, the types of buttons which are identical to those in the basic image screen are given the same reference numerals, and overlapping description thereof is omitted.

Reference numeral 1: Basic information editing, Reference numeral 2: History preparation, Reference numeral 6: Print, Reference numeral 7: Execution of 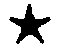 check box, Reference numeral 8: Radio button retrieval, Reference numeral 9: Item-by-item sorting, Reference numeral 10: Data group, screen change, Reference numeral 11: Data display screen change [1. Basic image], Reference numeral 12: Data display screen change [2. Class normal], Reference numeral 13: Data display screen change [3. Term management], Reference numeral 14: Data display screen change [4. Detailed history], Reference numeral 15: Simplified retrieval, Reference numeral 16: Default, Reference numeral 17: 1 cancel, Reference numeral 20: Favored retrieval and sorting conditions, Reference numeral 21: Main menu, Reference numeral 22 : Log-out, Reference numeral 23 : Page change, Reference numeral 24: Page jump, Reference numeral 25: Reset, Reference numeral 26: Print of certificates of registration, Reference numeral 27: Download, Reference numeral 28: Help, Reference numeral 29: Inquiry, Reference numeral 31: Display of certificates of registration, Reference numeral 32: Shift to the detailed history screen.

The term management screen displays term management of a case in the format of a list, by which the previous state, contents and term of the next enterprise, and staff in charge can be made clear. From the screen, it is possible to shift to the basic information editing screen of a case, to the screen to access and read certificates of registration, and to the detailed history screen. Further, the above basic information editing screen may be excluded.

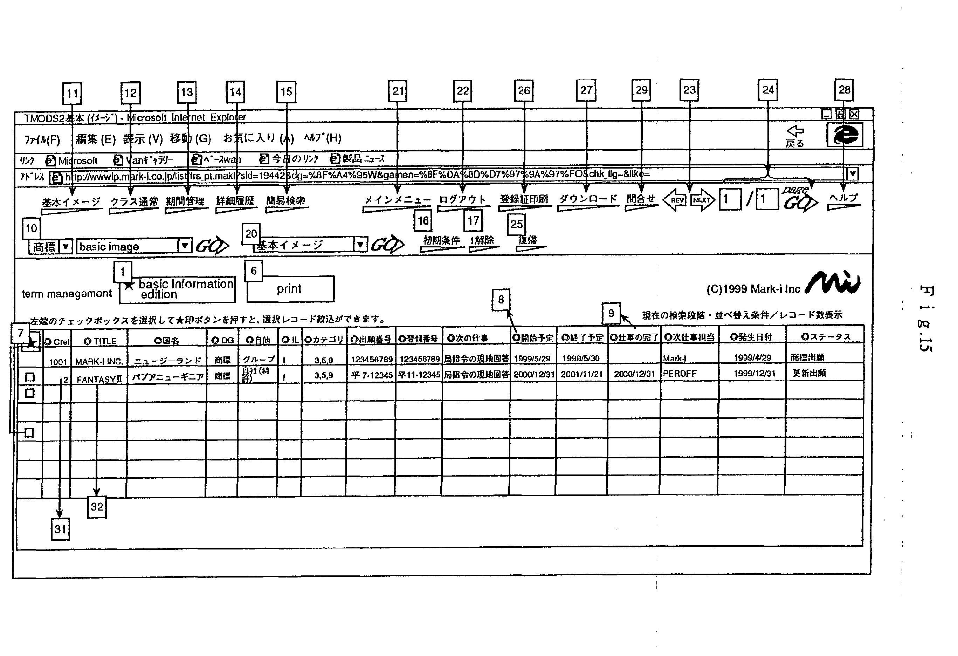

The term management screen 500 is illustrated in FIG. 15. A description is given of types of buttons in the respective screens in the corresponding drawing, and functions thereof. Also types of buttons which are identical to those on the basic image screen are given the same Reference numerals, and overlapping description thereof is omitted. Also, the above basic information editing may be excluded.

Reference numeral 1: Basic information editing, Reference numeral 6: Print, Reference numeral 7: Execution of 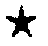 check box, Reference numeral 8: Radio button retrieval, Reference numeral 9: Item-by-item sorting, Reference numeral 10: Data group, screen change, Reference numeral 11: Data display screen change [1. Basic image], Reference numeral 12: Data display screen change [2. Class normal], Reference numeral 13: Data display screen change [3. Term management], Reference numeral 14: Data display screen change [4. Detailed history], Reference numeral 15: Simplified retrieval, Reference numeral 16: Default, Reference numeral 17: 1 cancel, Reference numeral 20: Favored retrieval and sorting conditions, Reference numeral 21: Main menu, Reference numeral 22 : Log-out., Reference numeral 23: Page change, Reference numeral 24: Page jump, Reference numeral 25: Reset, Reference numeral 26: Print of certificates of registration, Reference numeral 27: Download, Reference numeral 28: Help, Reference numeral 29: Inquiry, Reference numeral 31: Display of certificates of registration, Reference numeral 32: Shift to the detailed history screen.

Also, in the above basic image screen, basic text screen, newest information list screen, and term management screen, buttons of the basic image 11, class normal 12, term management 13, and detailed history 14 may be deleted. The simplified retrieval 15 may be replaced by a stopping-down retrieval screen. The inquiry 20 may be changed so as to read "Question". The reset 17 may be changed so as to read "Recovery". The default 16 may be changed so as to read "Initial state".

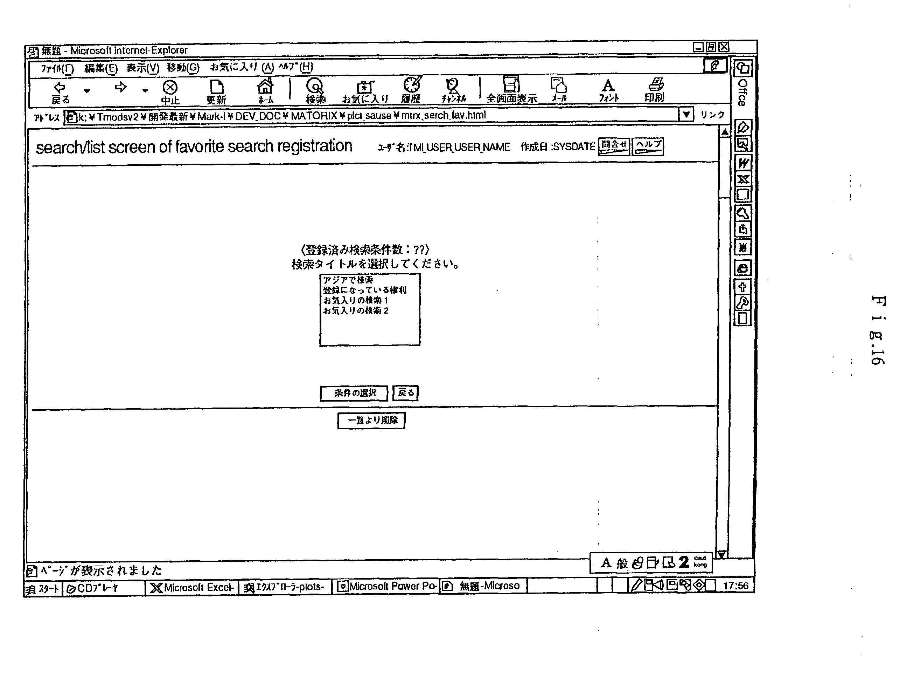

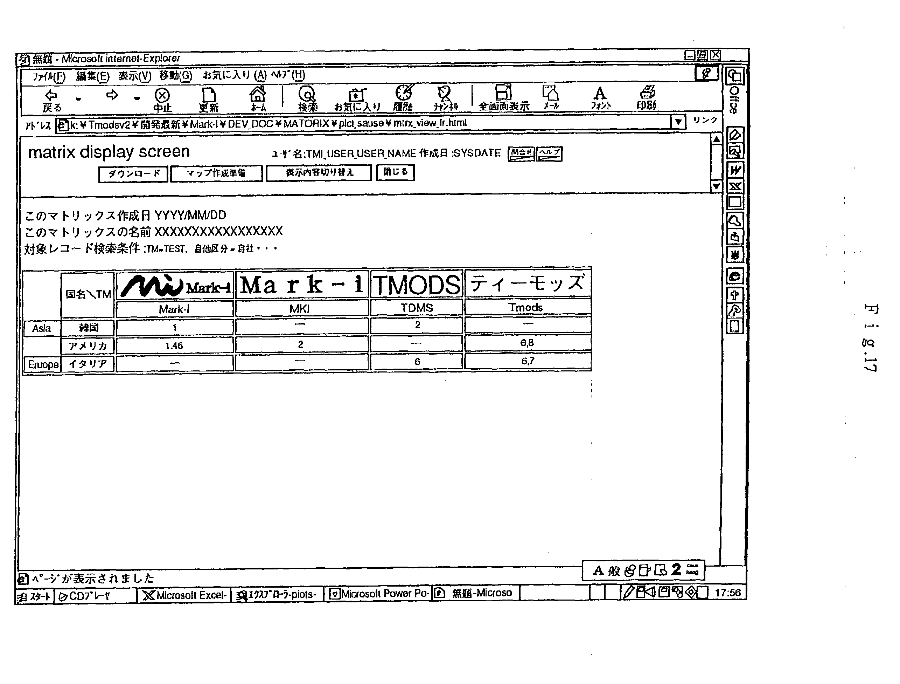

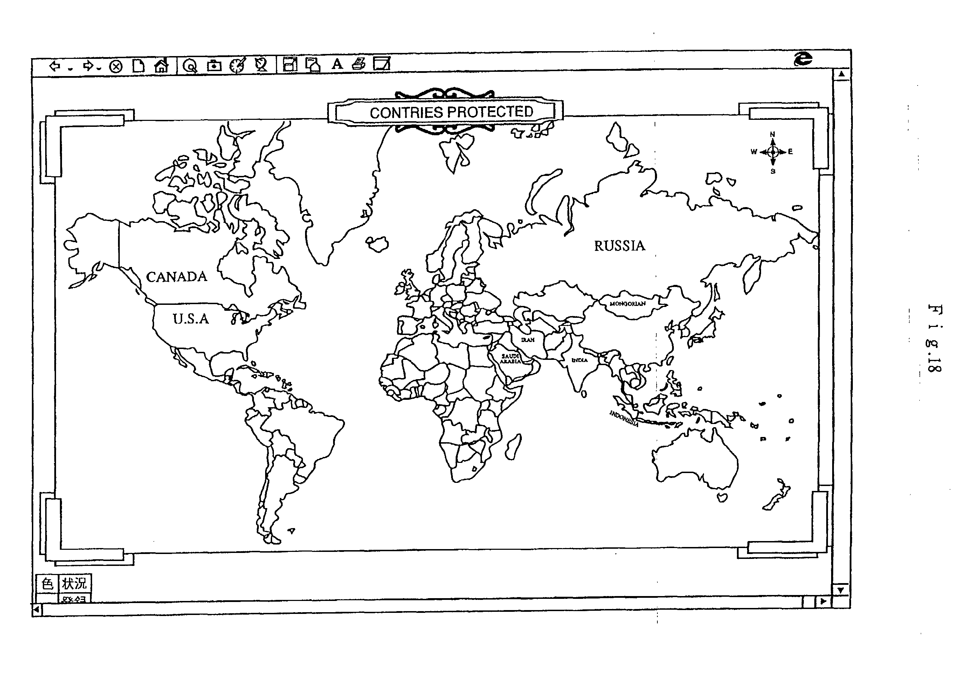

In addition, in the aforementioned screens, a matrix map button may be provided. By clicking the button, a matrix preparation setting screen as shown in FIG. 16 maybe displayed. Herein, press the NEXT button after selecting the detailed setting of the ordinate and abscissa. Thus, inputting a country in the ordinate and a trademark name in the abscissa, a matrix display screen as shown in FIG. 17 can be obtained. Further, the corresponding FIG. 18 may be expressed in the form of a world map as shown in FIG. 17.

The class normal screen is a screen (keyword master) in which keywords and detailed information of the designated goods/service can be observed as a list with data classified in compliance with classes of applications and the registration of respective cases. From the screen, it is possible to shift to the editing screen of a case, the keyword editing screen, the screen to access and read certificates of registration, and detailed history screen.

The class international reduction screen is the screen (keyword master) which classifies data in compliance with classes of applications and registration of respective cases, and further displays that which a local class is reduced to an international class, wherein keywords and detailed information of the designated goods/service can be observed as a list. From the aforementioned screen, it is possible to shift to the keyword editing screen, the detailed history screen, the screen to access and read certificates of registration, and the detailed history screen,

The renewal management screen is the screen by which the renewal management of a case can be carried out. The screen can display availability of a case-by-case renewal procedure and term management of the renewal procedure. Further, the present renewal procedure status can be observed. From this screen, it is possible to shift to the new history input screen, the screen to access and read certificates of registration, the basic information editing screen of a case, and the detailed history screen.

The detailed history screen is provided with the basic information screen and history information screen, which can manage all the histories regarding one case.

The detailed history screen displays the detailed information of a case in the upper section, and displays a history expressing the status of a case and examination thereof in the lower section. From the screen, it is possible to shift to a basic information editing screen of a case, and the screen on which LS retrieval, history preparation and editing, connecting and connecting clearing, class editing, editing of certificates of registration, keyword editing, record deletion, and trademark editing are executed.

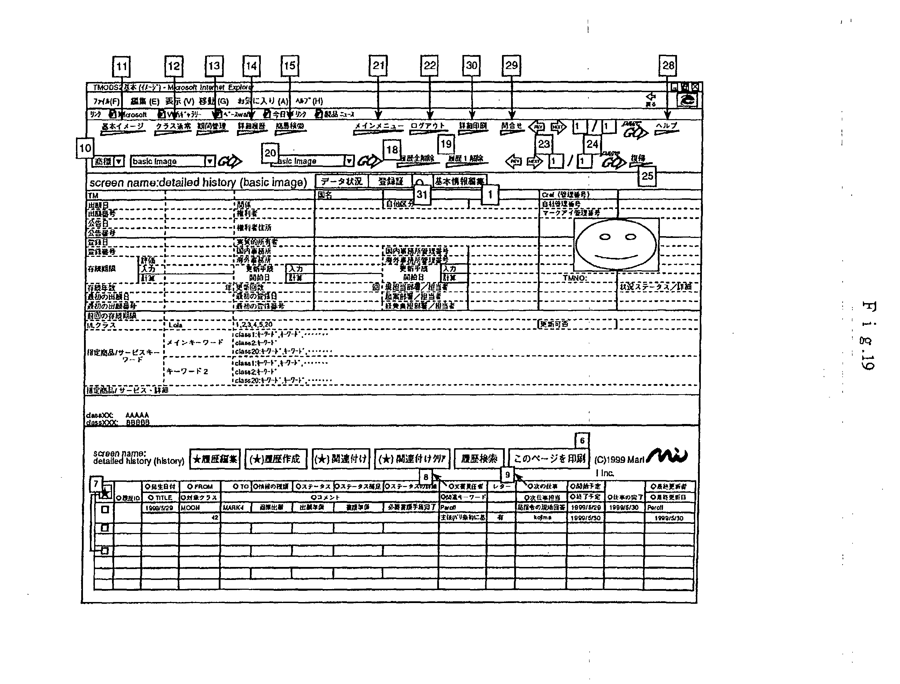

FIG. 19 shows the detailed history screen 600. A description is given of types of buttons in the menu frame column of respective screens in the corresponding drawing, and functions thereof. Also, the types of buttons which are identical to those of the basic image screen are given the same reference numerals, and the description thereof will be omitted.

Reference numeral 1: basic information editing, Reference numeral 10: data group and screen change, Reference numeral 11: data display screen change [1. Basic image], Reference numeral 12: Data display screen change [2. Class normal], Reference numeral 13: Data display screen change [3. Term management], Reference numeral 14: Data display screen change [4. Detailed history], Reference numeral 15: Simplified retrieval, Reference numeral 20: Favored retrieval and sorting conditions, Reference numeral 21: Main menu, Reference numeral 22: Log-out, Reference numeral 23: Page change, Reference numeral 24: Page jump, Reference numeral 25: Reset, Reference numeral 26: Print of certificates of registration, Reference numeral 27: Download, Reference numeral 28: Help, Reference numeral 29: Inquiry, Reference numeral 30: Detailed print (Prepare a layout of basic information detail and print thereof, Command: Icon), Reference numeral 31: Display of certificates of registration.

The respective buttons of the basic image 11, class normal 12, term management 13, and detailed history 14 may be deleted. The simplified retrieval 15 may be replaced by a stopping-down retrieval. All history cancellation 18 may be replaced by default. History 1 cancel may be replaced by 1 cancel.

A description is given of types of buttons in the main menu column of the respective screens on the detailed history (history) screen, and functions thereof. Also, the types of buttons which are identical to those in the basic image screen are given the same reference numerals, and the description thereof will be omitted.

Reference numeral 2: History preparation, Reference numeral 6: Print, Reference numeral 7: Execution of 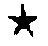 check box, Reference numeral 8: Radio button retrieval, Reference numeral 9: Item-by-item sorting, Reference numeral 10: Data group, Reference numeral 11: Data display screen change [1. Basic image], Reference numeral 12: Data display screen change [2. Class normal], Reference numeral 13: Data display screen change [3. Term management], Reference numeral 14: Data display screen change [4. Detailed history], Reference numeral 15: Simplified retrieval, Reference numeral 18: All cancel (History) (Cancel all stop-down of the history records of the detailed history to record sets that can be displayed. Command: Icon), Reference numeral 19: 1 Cancel (History) (Cancel the stop-down of the repeatable history records of the detailed history by one step. Command: Icon), Reference numeral 21: Main menu, Reference numeral 22: Log-out, Reference numeral 23: Page change, Reference numeral 24: Page jump, Reference numeral 25: Reset, Reference numeral 26: Print of certificates of registration, Reference numeral 28: Help, Reference numeral 29: Inquiry, Reference numeral 31: Display of certificates of registration.

A description is given of a method for commencing the access to data of cases in the database composed of the above screens.

The present database is logged in, and the screen shifts to the main menu screen. A data group is selected from the corresponding screen. Clicking the data group selection, the screen shifts to the data group start menu screen. There are three methods of starting, (1) General method (optional method), (2) Favored method, and (3) Continuation from the last time.

First, start is clicked in the general method (Optional method). The screen shifts to the simplified retrieval screen by clicking. On the simplified retrieval screen, desired data can be displayed by selecting the data group, name of a screen, Cref, company number, registration number, application number, country, title, and class. Trademark is selected as the data group, basic image is selected as the screen, and 9 is inputted for the class. Then retrieval execution is clicked, whereby the screen shifts to the basic image screen and displays the corresponding data.

Next, in the favorite method, the method can be commenced by selecting a retrieval condition, that has been previously registered, and a display screen.

A retrieval condition, sorting, data group and combination of screens are registered as the favored method, and are selected from the pull-down menu. First, in order to prepare the favored conditions, the data group of the main menu screen is selected by clicking, and the screen is made to shift to the data group start screen. Clicking start in the optional method in the data group start screen, the screen is made to shift to the simplified retrieval screen. The data group is set to "trademark", the screen is set to the "basic image screen", the other retrieval condition is set to "Class 9", and the arrangement sequence is set to "unchanged", which are registered as the favored method in the simplified retrieval screen.

In addition, in case it is desirable to establish detailed retrieval conditions, the set button of the detailed retrieval conditions is clicked. The name of a favored method, basic image, and class 9 are inputted in the registration name column, and a retrieval condition registration button is clicked. Here, a check screen for setting the retrieval condition is displayed, and the registration is completed.

To start using the favored method, it is confirmed that the data group start menu screen is displayed. In case the check screen for setting the retrieval condition is displayed, the next role is carried out. The screen for a list of registration conditions is displayed by clicking the return button of the check screen for setting the retrieval conditions, the detailed retrieval screen is displayed by clicking the return button of the screen of a list of registration conditions, and the simplified retrieval screen is displayed by clicking the simplified retrieval condition button of the detailed retrieval screen, and the data group start menu screen is displayed by clicking the return button of the simplified retrieval screen. Then, the basic image and class 9 are selected in the pull-down menu with respect to starting by the favored method of the data group start menu screen, and the "execution" button is clicked. Then, the screen shifts to the basic image screen, wherein the data (Class 9) corresponding to the retrieval conditions are displayed.

Next, as regards the start based on continuation from the last time, this is a method of starting the database from the display screen on the basis of the retrieval conditions established when logging out last time. Clicking "start" based on continuation from the last time in the data group start menu screen, the screen, which is in the same state as that when logged out last time, is displayed.

Next, a description is given of operations of the main list screen.

The operation of the main list screen is composed of data retrieval, data sorting, stop-down of data, stop-down cancel, and reference to certificates of registration. Herein, the operation is described on the basis of the basic image screen as an example.

First, data are retrieved. By clicking the simplified retrieval button in the menu frame in the basic image screen, the simplified retrieval screen appears, wherein Cref, company number, registration number, application number, country, title, and class are designated. By inputting the retrieval conditions and clicking the retrieval execution button, a record which agrees with the retrieval conditions is displayed from the database. Also, since no IL can be retrieved in the simplified retrieval screen, the "set button" of the detailed retrieval conditions which are provided in the simplified retrieval screen is clicked, and the screen is made to shift to the detailed retrieval screen. And, the IL is selected from the pull-down menu of the DB item column in the detailed retrieval registration located at the lower portion of the detailed retrieval screen, and "L" is entered in the space at the right side, Then, the retrieval execution button is clicked, whereby the screen is made to shift to the basic image screen, and data which agrees with the retrieval conditions can be displayed. Further, the data retrieval in the simplified or detailed retrieval screen is a stop-down retrieval. Clicking the simplified retrieval button, the retrieval is executed with respect to the data that are selected at present.

Although the data retrieval in the simplified or detailed retrieval screen was described on the basis of the basic image screen, the same data retrieval can be carried out by the same procedure in the basic text screen, term management screen, renewal management screen, newest information screen, class normal screen, and class international reduction screen. As for retrieval only from the detailed history screen, the data group and the screen can be selected.

Next, in case there is a radio button at the left side of the name of the items on the list screen, the items can be retrieved. When carrying out retrieval in the items by using the radio button, first, the radio button at the left side of the name of items is clicked. A value to be retrieved is entered, and the retrieval button is clicked. For example, in case retrieved data has "Korea" as the name of a country, the radio button in the country name column is clicked, a dialog box is displayed, wherein a value that is to be retrieved, that is, KOREA, is inputted, and the retrieval button is clicked. Then, the background of the corresponding cases is sorted by colors as the result of the retrieval, and is displayed.

In addition, the underlined item name located at the extreme upper portion of a list can be sorted in ascending and descending order. For example, in case sorting is carried out on the basis of country name and TM (trademark), if the country name of the item is clicked, the countries are sorted in ascending order, and by clicking the country name again, the countries are sorted in descending order. By clicking the country name once again, the countries are sorted in ascending order. By clicking the TM (trademark), the TM is sorted in ascending order in the state where the countries sorted in ascending order.

The sorting can be carried out up to five levels. If the sixth level sorting is executed, it is processed as the first level. The sorting conditions that are selected at present are displayed on the upper left part of the list. Retrieval in the items is limited to the first item retrieval. Also, it is not possible to stop down the data by the retrieval. Further, color-sorted display is canceled by the execution of sorting of another item, or new execution of retrieval in the items.

Still further, it is possible to sort data by writing a desired sorting sequence in compliance with the line-up of the simplified or detailed retrieval screen. In the default, the data are arranged in the order of Cref, country, title and category. When executing sorting by the simplified or detailed retrieval, the simplified retrieval button of the menu frame is clicked. A desired sequence of sorting is entered in the [sorting order] in the simplified retrieval screen (If no simplified retrieval screen is provided, the [setting of detailed retrieval conditions] is clicked, the screen is made to shift to the detailed retrieval screen), and the retrieval execution button is clicked.

For example, in case sorting in the order of category, title, country, and Cref, the simplified retrieval button in the menu frame is clicked, the screen is made to shift to the simplified retrieval screen. Input 4 for the Cref, 3 for the country, 2 for the title, and 1 for the category, which are located in the arrangement sequence of the simplified retrieval screen. Then, the retrieval execution button is clicked, whereby newly sorted data are displayed on the basic image screen.

The data are stopped down in the following manner.

The check box located at the left end of a record that is desired to be stopped down is checked and selected, and the execution button is clicked. For example, if 1 through 3 cases are stopped down by Cref, the check box located at the left end of the case data Cref 1 through 3 that are stopped down and displayed is checked and selected, and the execution button is clicked, whereby only the case data Cref 1 through 3 that have been selected are displayed. The stop-down is repeatedly enabled. In the stop-down, the retrieval of data in the items in the list screen can be carried out in the same manner. Also, it is possible to stop down the data by setting the retrieval conditions in the simplified or detailed retrieval screen.

After stopping down the data, the stop-down may be cancelled. In canceling the stop-down of data, [1 cancel] in the menu frame may serve to cancel the stop-down once, and by [All cancel], the status is returned to the extraction conditions executed in the simplified or detailed retrieval when logging in.

For example, in case the Cref stopped down data of the case 1 and the stop-down is cancelled, [Data stop-down] that has been executed above is carried out, and the Cref stops down the data of case 1.

As the [1 cancel] button of the menu frame is clicked, the stop-down is cancelled. Data of cases 1 through 3 are displayed in the Cref. When the [All stop-down] button is clicked, all the stop-down is cancelled, wherein the data of the case, in which the class is [9] being the retrieval condition after logging in, is displayed.

In case materials such as a certificate of registration, a document translated into English, and publications, etc., are registered, the Cref of the main list screen is clicked. For example, the Cref refers to the certificate of registration in the data of the case 1. First, as the Cref 1 of the case, of which the certificate of registration and document translated into English are referred to, is clicked, the screen shifts to the certificate image editing screen. The Cref displays a certificate of registration, etc., registered in the case 1. And, clicking the [Return] button of the menu frame, the screen is returned to the [Basic image screen], wherein it is possible to edit the keywords of images and the display order in the certificate image editing screen. Reference to the certificates of registration in the list screen can be made by the same procedure.

A description is given of the detailed history screen.

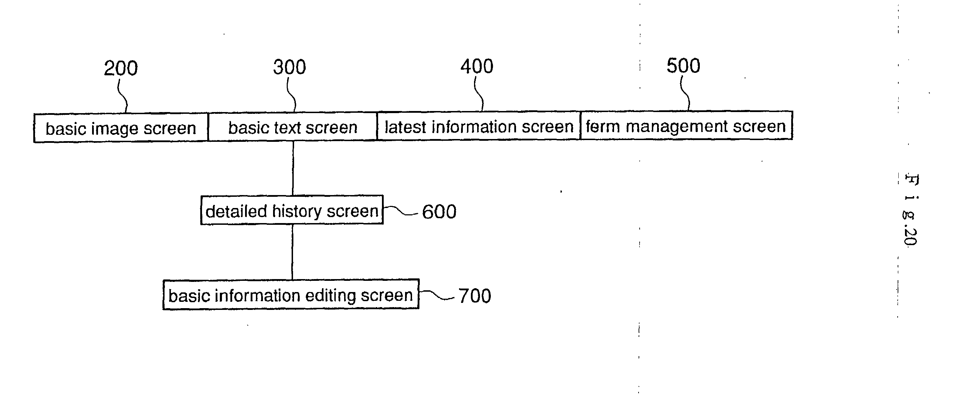

FIG. 20 shows a view related to shift (transition). As illustrated in the corresponding drawing, the detailed history screen 600 can be obtained from the basic image screen 200, basic text screen 300, latest information screen 400, term management screen 500, and further from the class normal screen, class international reduction screen and renewal term screen. Still further, the screen can be changed from the detailed history screen 600 to the basic information editing, screen 700.

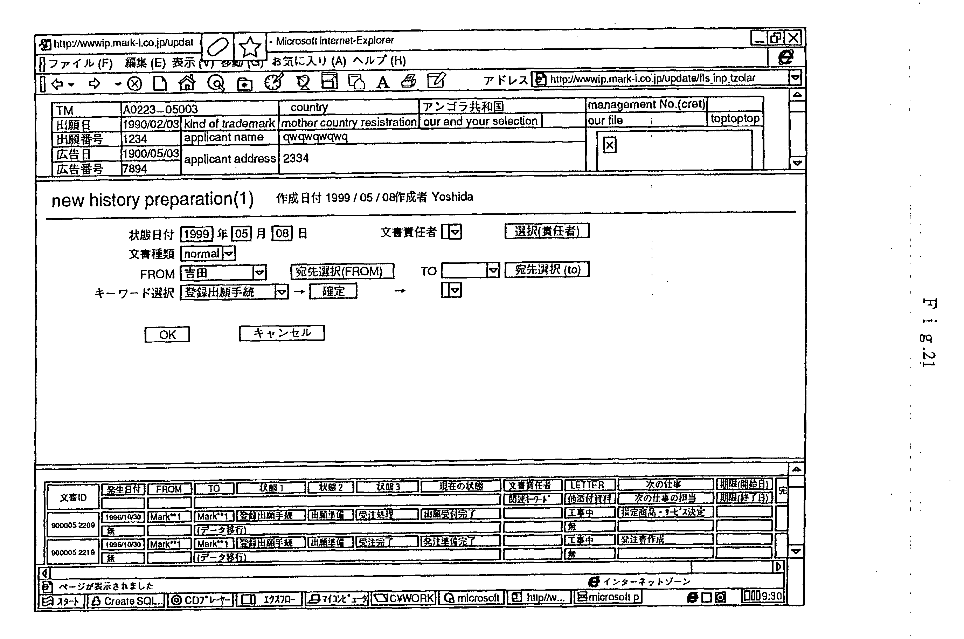

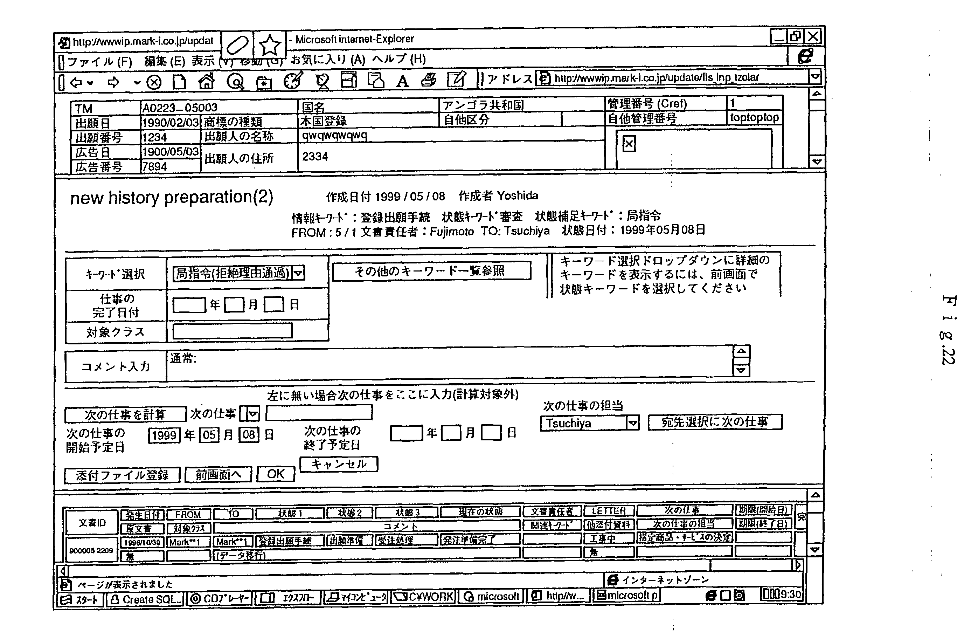

The history preparation screen is provided with a new history preparation screen (1) (FIG. 21) and a new history preparation screen (2) (FIG. 22). The new history preparation screen (1) is provided with a basic information column at the upper section, a role item column of the new history preparation (1) at the middle section, and a detailed history column of the selected case at the lower section.

The role items of the new history preparation (1) are provided with data of occurrence, selection of addresses of FROM/TO, selection of the person in charge of documents, selection of types of documents, and information keyword selection, supplementary status keyword selection. They are displayed by the pull-down menu. Herein, the past values are displayed in the pull-down system for the FROM/ON address selection, and selection of a person in charge of documents.

The screen for selecting FROM/TO addresses and person in charge of documents shifts to the screen for referring to a directory or selecting an address, wherein an address is selected while referring to the directory. The screen (1) for referring to a directory and selecting an address is provided with a basic information column at the upper section and a retrieval processing column at the middle section, and a history for a selected case at the lower section, (2) thereof is provided with a basic information column at the upper section, a reference list column at the middle section, and a history for a selected case at the lower section, and (3) thereof is provided with a basic information column at the upper section, a detailed display column at the middle section, and a history for a selected case at the lower section.

The new history preparation (2) screen is provided with a basic information column at the upper section, a role item column of the new history preparation (2) at the middle section, and a detailed history column for a selected case at the lower section, wherein the role item of the new history preparation (2) is provided with display of the contents confirmed in the previous screen, the present history, and information pertaining to the next enterprise. In addition, the present history includes an event keyword selection, a date of completion of the enterprise, an objective class, and a comment input item. The next enterprise includes selection of the next enterprise, selection of a person in charge of the next enterprise, planned date of commencement of the next enterprise, planned date of termination of the next enterprise, attached file registration, and detailed letter preparation. Herein, the event keyword selection and next enterprise selection are provided with calculation/pull-down (drop-down) of the next enterprise, and optional input/text box. The corresponding screen for selection of the next enterprise is further provided with a basic information column at the upper section, a keyword list reference, selection and optional keyword input column at the middle section, and a detailed history column for a selected case at the lower section.

Also, in only a case where a progress keyword =[Completion of registration] is selected in the new history preparation (2) screen, the screen can shift to the renewal registration screen. The corresponding renewal registration screen is provided with a basic information column at the upper section, a renewal data registration column at the middle section, and a detailed history column for a selected case at the lower section. Herein, the renewal data registration column is provided with an information display item (before a renewal procedure) pertaining to the renewal in the left column, and an information input item (after the renewal procedure is completed) pertaining to the renewal in the right column. In addition, the information input item pertaining to the renewal in the right column includes date data input, I/L selection, renewal in the GS, and class editing, and the corresponding class editing screen is provided with a basic information column at the upper section, a renewal data registration column at the middle section, and a detailed history column for a selected case at the lower section. Herein, the renewal data registration column includes a class/GS information display item (before the renewal procedure) in the left column, and a class/GS information input item (after the renewal procedure) in the right column. Further, the class/GS information input item in the right column is provided with new class addition, class deletion, and GS edition in the class.

In order to operate shift to the detailed history screen, first, a TM (trademark) of a case for which reference is made to the detailed history is clicked. For example, clicking the TM of a case (Cref is 5) for which it is desirable to refer to the basic information and history information, the screen shifts to the detailed history screen, wherein the basic information and detailed history information of the selected case are displayed.

Also, by clicking the basic image button of the menu frame, the screen is returned to the basic image screen. Next, a description is given of operations to prepare a history that expresses the state of a case, status situations, who asked what to whom, when it was completed, etc. Herein, a history is prepared for cases other than Cref 2 through 4.

First, a favored case is checked and selected in the basic image screen, and the history preparation button is clicked, whereby the screen shifts to a new history preparation (1) screen. Next, the basic information summary of the case for which the history being prepared is displayed at the upper section, a screen for inputting and selecting role items to prepare a new history is displayed at the middle section, and the existing detailed history is displayed at the lower section. At the middle section, "normal" is selected from the pull-down menu as the status date and type of document, and an address selection (FROM) button is clicked in order to input an address in the FROM to express from whom an action was released with respect to the history to be prepared.

Next, the screen shifts to an address list screen. The radio button located at the left side of the address information that is selected is checked, and selection is clicked, the screen is returned to the new history preparation (1) screen, and the address information that has been selected is inputted in the FROM. Next, selection (person in charge) is clicked in order to input the person in charge of documents expressing the person in charge of history documents, and address selection (TO) is clicked in order to input the address in TO to express to whom an action will be released with respect to the history to be prepared, where the operation of ④ described above is repeated. Next, a registration procedure is selected from the keyword selection pull-down menu, which will become a type of information of the history screen, another keyword which will become the supplementary status is automatically displayed. An order receipt process is selected from the pull-down menu, and preparation is clicked.

Next, a keyword expressing the details of status is selected from the keyword selection pull-down menu in the new history preparation (2) screen. If there is no desired keyword in the pull-down menu, reference to a list of other keywords is clicked, whereby the screen shifts to the screen for referring to and selecting a list of other keywords. Next, an objective class that expresses to which class the history that is being prepared belongs is inputted (Where the case has a plurality of classes, to clarify in which class the history was prepared).

Next, the type of document designated on the new history preparation (1) screen is displayed in the input column of the comment. Here, comments on the history document that is being prepared are inputted. Next, calculation of the next enterprise is clicked. The next enterprise is automatically calculated on the basis of respective keywords that have been selected, and is displayed in the pull-down menu of the next enterprise. Herein, application instruction is selected. Next, address selection (next enterprise) is clicked in order to input the person in charge of the next enterprise, which identifies the person in charge of the next enterprise.

Next, the planned date of commencement of the next enterprise and planned date of termination thereof are inputted. In case the enterprise has been already finished with respect to the history that is being prepared, the date of the completion is inputted. In addition, a file related to the history may be attached to the history. If there is no file to be attached, [OK] is clicked, and the system proceeds to 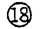 . By clicking "attached file registration", the screen shifts to the attached file registration screen. By clicking "reference", the selection window of the file is displayed to designate the file to be attached. Comments regarding the attached file are inputted. Then, clicking "attached file registration", the screen is returned to the new history preparation (2) screen. Clicking [OK] in the new history preparation (2) screen, the screen shifts to the screen for checking detailed history preparation. By clicking [OK] after the contents are checked, preparation of a new history is commenced, and the screen shifts to the detailed history preparation screen.

Hereinafter, a description is given of operations to a newly prepared history.

First, the history to be edited is checked, and the history editing button is clicked into the new history preparation (1) screen. Next, information to be edited is inputted and selected, and the [OK] button is clicked. Next, the [OK] button is clicked in the screen for checking the detailed history preparation.

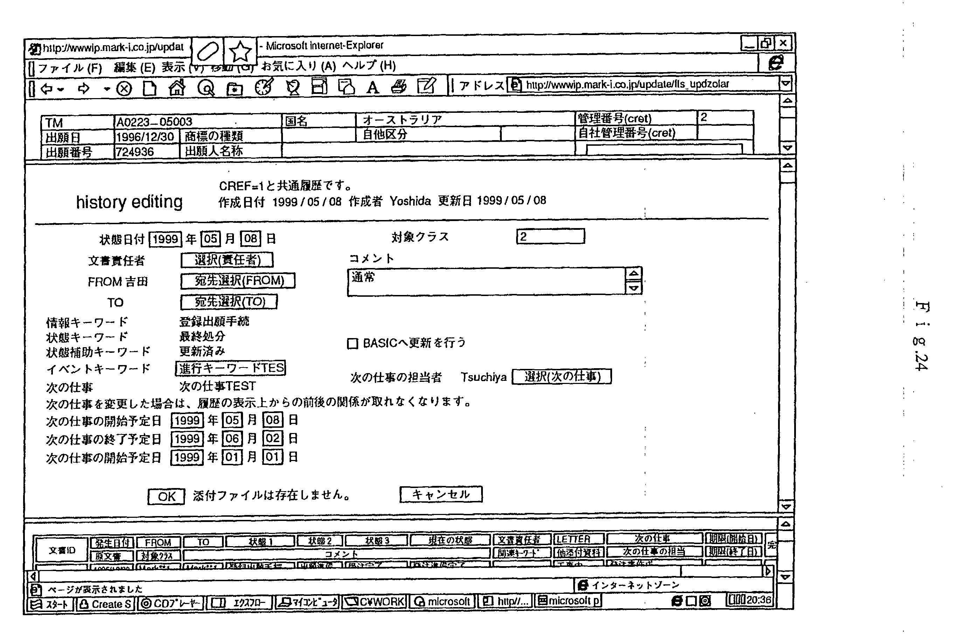

Here, a description is given of operations for editing a favored ID with respect to the document ID. First, a check box located at the right side of the history to be edited is checked and selected, and the history editing is clicked, whereby the screen shifts to the new history preparation (1) screen. In the new history preparation (1) screen, the column to be edited is edited, "selection (person in charge)" is clicked for the person in charge of document, "address selection(FROM)" is clicked for FROM, "address selection (TO)" is clicked for.TO, and "address selection(Next enterprise)" is clicked for the person in charge of the next enterprise, whereby they are selected from the directory for edition. With respect to edition of an attached file, "attached file check" is clicked, and the [OK] button is clicked on the screen for downloading the attached files, whereby the history is edited, and the screen shifts to the screen for checking a detailed history preparation. Herein, if the [OK] button is clicked, the screen shifts to the detailed history screen. The history editing screen is illustrated in FIG. 24.

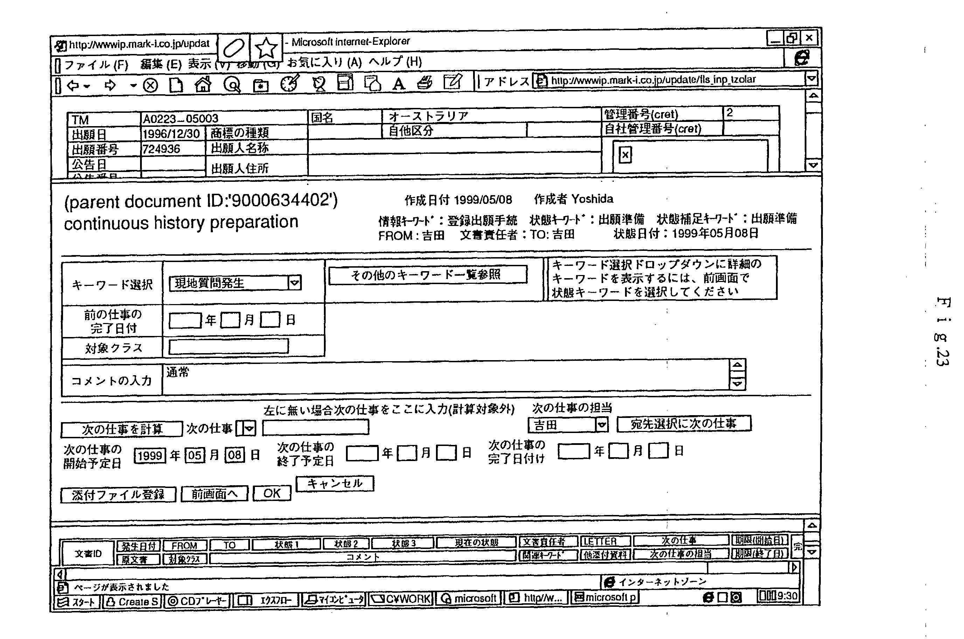

Next, a description is given of operations for new preparation of [Continuous history]. Here, [Continuous history preparation (2) screen] is illustrated in FIG. 23. Here, a history continuous from the existing history is called a "continuous history", and it is possible to prepare a plurality of sub-histories with respect to one main history. For the operation, first, a history to be edited is checked, and the history editing button is clicked, whereby the screen shifts to the new history preparation (1) screen. Information to be edited is inputted and selected, and the [OK] button is clicked. Herein, a description is given of operations for editing a favored ID number with respect to the document ID. First, a check box located at the left side of'the original history (where the document ID is a favored ID) is checked and selected, in which a continuous history is prepared, and the history preparation is clicked, whereby the screen shifts to the continuous history preparation (1) screen. And, the basic information summary of the case for which a history is being prepared is displayed at the upper section, a screen for inputting and selecting role items for a continuous history preparation is displayed at the middle section, and the existing detailed history is displayed at the lower section. The remaining operations refer to those in the aforementioned new history preparation and history editing.

Next, a description is given of the basic information editing screen on which the basic information of a case can be edited.

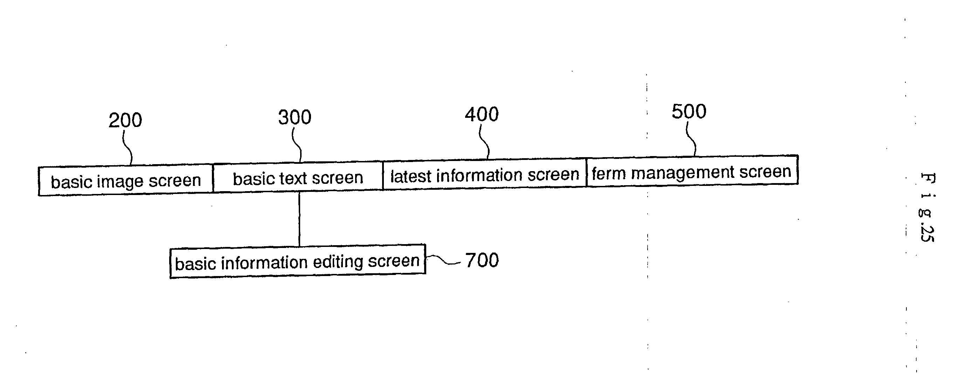

FIG. 25 shows a view related to transitions. As shown in the corresponding drawing, the basic information editing screen 700 can be obtained from the basic image screen 200, basic text screen 300, latest information screen 400, and term management screen 500.

The basic information editing screen has the basic information (basic editing frame) displayed at the upper section and has basic information, which is selected on the basic image screen, basic text screen, latest information list screen, term management screen, and renewal management screen, displayed at the lower section. On the basic information editing screen, it is possible to edit the basic information, classes, certificates of registration, keywords, and trademarks, and to delete the basic information.

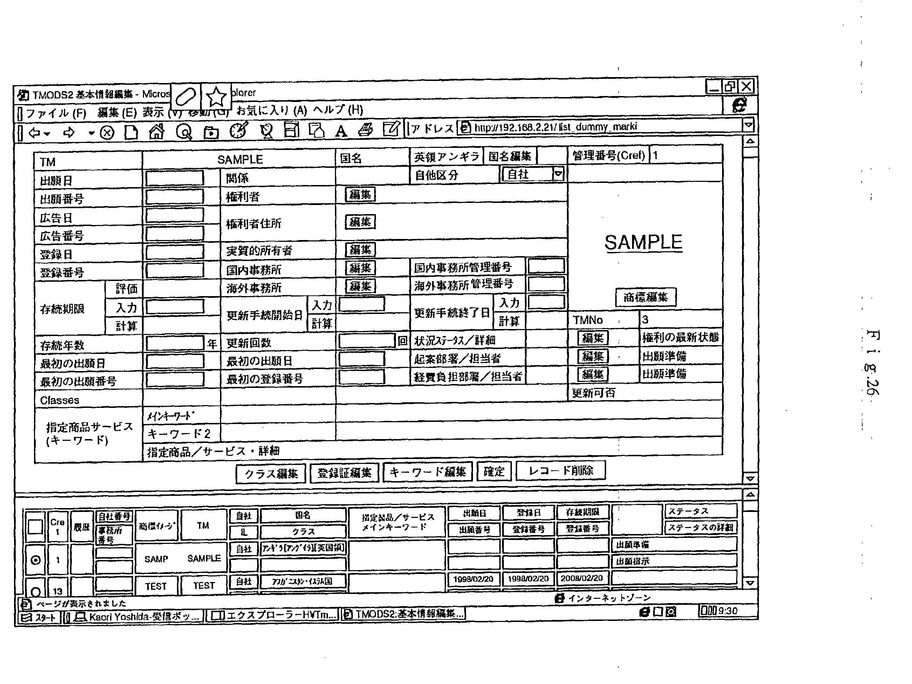

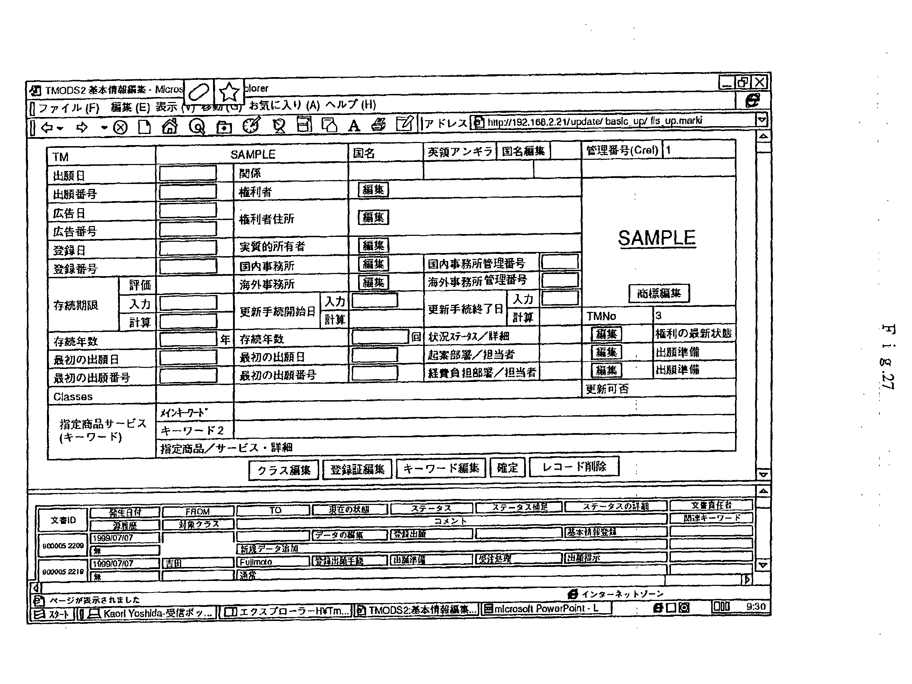

FIG. 26 shows the basic information editing screen when it is shifted from the main list screen, and FIG. 27 shows the basic information editing screen when it is shifted from the detailed history screen.

The basic editing frame is provided with the following item screens; class editing, keyword editing, registration certificate editing, record deletion, TM/trademark image registration/renewal, directory reference, and country selection, wherein in the class editing, the class editing screen appears, in which class editing, class addition and class deletion can be carried out. The class editing can be executed after the screen shifts to the screen with class indication, GS editing, and application G/S. The class addition is executed after the screen shifts to the screen equipped with class input, GS input and application G/S.

At keyword editing, the screen shifts to the keyword editing screen in which keywords are edited after the type of keyword is selected and the objective class is selected. The keyword editing, after the type of keyword is selected and the objective class is selected, is executed after the screen shifts to the screen for reference and selection of the keyword master.

With respect to the certificate registration (image) editing, the screen shifts to the thumbnail display screen, in which page replacement, image deletion and new registration can be carried out. On the thumbnail display, an editing action and an operation method can be selected. Also, by uploading "selection" of the operation method, an image file is uploaded.

With respect to the TM/trademark image registration and renewal, the screen shifts to the trademark data editing screen on which the trademark master is selected, and a new trademark can be registered. The trademark master selection is executed after the screen shifts to the screen for reference and selection of trademark data. A new trademark is executed after the screen shifts to the screen for registering trademark image data. Reference to the directory is executed after the screen shifts to the screen for reference and selection of directory and it shifts to the screen equipped with a retrieval process, reference list, and detailed display. The country name is selected after the screen shifts to the country selection screen.

First, a description is given of an operation from the main list screen to the basic information editing screen. It is possible to shift from the basic information of a case in the basic image screen, basic text screen, newest information list screen, term management screen, and renewal management screen, to the basic information editing screen in which the basic information of a case can be edited.

To shift from the main list screen to the basic information editing screen, a case to be edited on the list screen is checked and selected, and the basic information editing button is clicked. Herein, the Cref of the basic image screen refers to the basic information editing screen of the case 2. First, the check box located at the left side of the case (Cref is 2) for which the basic information has been edited is checked and selected. And, as the basic information editing button is clicked, the screen shifts to the basic information editing screen, wherein the basic information of the selected case (Cref is 2) is displayed, and by clicking the return button at the upper and lower sections of the basic information editing screen, the screen is returned to the basic image screen.

A description is given of transition from the detailed history screen to the basic information editing screen. The basic information editing button is clicked in the detailed history screen. First, the "TM data" of the basic image screen on which the Cref is 2 is clicked, and the screen shifts to the detailed history screen. Then, by clicking the basic information editing at the right upper part of the middle section on the detailed history screen, the screen shifts to the basic information editing screen. By clicking the "return button", the screen is returned to the detailed history screen.

Next, a description is given of operations of the basic information editing screen.

In a case where a plurality of cases are selected on the basic image screen, basic text screen, newest information list screen, term management screen, and renewal management screen and the screen shifts to the basic information editing screen, a case to be edited is selected from the cases displayed at the lower section (The check box at the left side of the cases is checked and selected, and the "editing button" is clicked). At this time, it is ensured that the basic information of the case to be edited is displayed at the upper section. First, a column that needs to be edited is selected on the basic information editing screen, and new data are written therein. A "check button" is clicked. Since the new data are displayed on the window screen for checking the execution of changes, [OK] is clicked.

Here, in case the Cref edits the case of 1, as regards the items such as the application date, a column that needs to be edited is selected, and data are directly written therein. The country editing is executed in the screen for editing a country name. That is, the country selection button is clicked, the screen shifts to the screen for selecting country names. First, a radio button of a desired country is clicked in the country list, and a "confirm button" is clicked, whereby the selected country name is displayed in the basic information editing screen.

In columns that need to be edited, "editing" is clicked. By clicking the "editing", the screen shifts to the directory screen, on which the "radio button" at the left side of the desirable directory information is clicked, and the selection button is also clicked. Then, the selected value is displayed on the basic information editing screen. After all the items that need to be edited are changed, the "confirm button" is clicked. Since it is displayed in the window screen for confirming the execution of changes, [OK] is clicked. The editing is confirmed, and the screen is returned to the basic information editing screen.

Data of a directory, which are necessary to select addresses and various types of names in the basic information editing, history preparation and editing, etc., are managed. The screen shifts to the directory screen by clicking the directory on the main menu screen.

Hereinafter, a description is given of operations of reference to and editing of the directory. By clicking the directory reference and editing button on the screen of a directory, the screen shifts to the directory retrieval screen. Next, a retrieval item is inputted, and by clicking the retrieval commencement button, the screen shifts to the directory list screen.

By clicking the print button on the basic image screen, basic text screen, latest information list screen, term management screen, renewal management screen, class normal screen, and class international reduction screen, a list can be printed out so as to be accommodated on a sheet of paper.

It is possible to download data on the basic image screen, basic text screen, latest information list screen, term management screen, renewal management screen, class normal screen, and class international reduction screen in the CSV format.

According to the method for optimally executing business tasks of the invention, it is possible to efficiently carry out an enterprise to be done in a short time and be well acquainted with the present situations of a business task, and achievement of the enterprise can be improved.

According to the method and apparatus for optimally achieving business tasks of the invention, a business task can be optimally executed by making the business task environment common to a firm and a patent attorney office responsible for the enterprise assigned by the firm. Concurrently the method can bring about outcomes obtained by the corresponding method by optimally executing business tasks in a common business task environment.

According to the method and apparatus for optimally executing business tasks of the invention, it is possible to efficiently carry out an enterprise in a short time and be well acquainted with the present situations of a business task, and the execution of the enterprise can be improved.

By commonly sharing business tasks between managerial staff, persons in charge, respective departments and a patent attorney office, a business task progressing at present can be known to all the persons concerned depending on each status of their own, whereby an optimal judgment on business tasks can be carried out.

Since documents are digitized through daily business tasks and stored or maintained in a main computer, there is no particular need of physical filing, whereby security can be easily secured, and manpower can be greatly saved.

Since the business task information is logically constructed, various types of data can be easily analyzed. In addition, business costs can be remarkably reduced.

By using a common database, there is no need to carry out maintenance and renewal of computer devices at the client side.

The objectivity of data can be maintained, whereby an appointed level of quality in an enterprise can be secured irrespective of change in the people in charge. Print efficiency can be achieved.

### Industrial Applicability

According to a method for optimally executing business tasks of the invention, a business task can be optimally executed by making the business task environments of a firm and a patent attorney office responsible for enterprise assigned by the firm common, and it is possible to optimally execute business tasks in a common business task environment. The above embodiment is described on the basis of a trademark as an example. However, the method is applicable to management of patents, designs, and to usual business tasks.

## Claims

1. A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored in said computer arises, and registering the same therein;
said keywords being assigned to respective business tasks and simultaneously being provided with information on persons capable of executing said business tasks, persons authorized to approve said executable business tasks, persons authorized to access and read the contents of said business tasks, and persons capable of executing business tasks which come after said business tasks;
preparing a letter of business tasks incidental to said keywords on a display screen;
transmitting said letter by utilizing communication means to anyone capable of executing said business tasks, persons authorized to approve said executable business tasks, persons authorized to access and read the contents of said business tasks, or persons capable of executing business tasks which come after said business tasks on the basis of said keywords provided in said letter; and
executing appointed business tasks by said persons.

2. A method for optimally executing business tasks, said method comprising the steps of:
assigning assumed business tasks with keywords;
converting said keywords into a plurality of languages, and registering said keywords prepared in a plurality of languages in a database of a computer;
selecting said keywords from business task keywords stored in said computer when a first business task arises;
preparing new keywords when a business task not stored in said computer arises, and registering the same therein upon receiving approval from another person in charge;
said keywords being assigned to respective business tasks and simultaneously being provided with information on persons capable of executing said business tasks, persons authorized to approve said executable business tasks, persons authorized to access and read the contents of said business tasks, and persons capable of executing business tasks which come after said business tasks;
preparing a letter of business tasks incidental to said keywords on a display screen;
transmitting said letter by utilizing communication means to anyone capable of executing said business tasks, persons authorized to approve said executable business tasks, persons authorized to access and read the contents of said business tasks, or persons capable of executing business tasks which come after said business tasks on the basis of said keywords provided in said letter; and
executing appointed business tasks by said persons.

3. A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored in said computer arises, and registering the same therein;
examining said newly prepared keywords, and registering said keywords upon receiving approval of a third party by correcting the same as necessary;
said keywords being assigned to respective business tasks and simultaneously being provided with information on persons capable of executing said business tasks, persons authorized to approve said executable business tasks, persons authorized to access and read the contents of said business tasks, and persons capable of executing business tasks which come after said business tasks;
preparing a letter of business tasks incidental to said keywords on a display screen;
transmitting said letter by utilizing communication means to anyone capable of executing said business tasks, persons authorized to approve said executable business tasks, persons authorized to access and read the contents of said business tasks, or persons capable of executing business tasks which comes after said business tasks on the basis of said keywords provided in said letter; and
executing appointed business tasks by said persons.

4. A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored
in said computer arises, and registering the same therein;
said keywords being assigned to respective business tasks and simultaneously being provided with information on persons capable of executing said business tasks, persons authorized to approve said executable business tasks, persons authorized to access and read the contents of said business tasks, and persons capable of executing business tasks which come after said business tasks;
receiving a letter of business tasks incidental to said keywords from a display screen;
transmitting said letter by utilizing communication means to anyone capable of executing said business tasks, persons authorized to approve said executable business tasks, persons authorized to access and read the contents of said business tasks, or persons capable of executing business tasks which come after said business tasks on the basis of said keywords provided in said letter;
executing appointed business tasks by said persons; and
calculating the time required to complete the business task on the basis of said keywords, and managing the time of the business task.

5. A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored in said computer arises, and registering the same therein;
said keywords being assigned to respective business tasks and simultaneously being provided with information on persons capable of executing said business tasks, persons authorized to approve said executable business tasks, persons authorized to access and read the contents of said business tasks, and persons capable of executing business tasks which come after said business tasks;
receiving a letter of business tasks incidental to said keywords from a display screen;
transmitting said letter by utilizing communication means to anyone capable of executing said business tasks, persons authorized to approve said executable business tasks, persons authorized to access and read the contents of said business tasks, or persons capable of executing business tasks which come after said business tasks on the basis of said keywords provided in said letter;
calculating the amount of money required to complete the business task on the basis of said keywords; and
executing an appointed business task by said persons.

6. A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored in said computer arises, and registering the same therein;
said keywords being assigned to respective business tasks and simultaneously being provided with information on persons capable of executing said business tasks, persons authorized to approve said executable business tasks, persons authorized to access and read the contents of said business tasks, and persons capable of executing business tasks which come after said business tasks;
receiving a letter of a business task incidental to said keywords from a display screen;
transmitting said letter by utilizing communication means to anyone capable of executing said business tasks, persons authorized to approve said executable business tasks, persons authorized to access and read the contents of said business tasks, or persons capable of executing business tasks which come after said business task on the basis of said keywords provided in said letter;
acquiring a screen of business tasks pertaining to said keywords from the display screen; and
executing appointed business tasks by said persons.

7. A method for optimally executing business tasks, said method comprising the steps of:
assigning assumed business tasks with keywords;
registering said keywords in a database of a computer;
selecting said keywords from business tasks stored in said computer when a first business task arises;
preparing new keywords when a business task not stored in said computer arises, and registering the same therein;
said keywords being assigned to respective business tasks and simultaneously being provided with information on persons capable of executing said business tasks, persons authorized to approve said executable business tasks, persons authorized to access and read the contents of said business tasks, and persons capable of executing business tasks which come after said business tasks;
preparing a letter of a business task incidental to said keywords on a display screen;
said letter being provided with attributes for distributing the same to items expected to be distributed; and attributes of means for transmitting the same;
transmitting said letter by utilizing communication means to anyone capable of executing said business tasks, persons authorized to approve said executable business tasks, persons authorized to access and read the contents of said business tasks, or persons capable of executing business tasks which come after said business tasks on the basis of said keywords provided in said letter;
distributing said letter to said items to be anticipated; and
executing appointed business tasks by said persons.

8. A method for optimally executing business tasks as set forth in Claim 6, **characterized in that** said screen of a business task is a screen for displaying the received business task.

9. A method for optimally executing business tasks as set forth in Claim 6, **characterized in that** said screen of a business task is a screen for displaying the transmitted business.

10. A method for optimally executing business tasks as set forth in Claim 6, **characterized in that** said screen of a business task is at least one of a screen of communication records, a screen of task progress records, a screen of status records, and a screen of self task management.

11. A method for optimally executing business tasks as set forth in Claim 1, 2, 3, 4, 4, 6 or 7, **characterized in that** said keywords are expressed classified according to their respective business tasks and are constituted so as to have attributes thereto.

12. A method for optimally executing business tasks as set forth in Claim 11, **characterized in that** said keyword has at least one attribute, and preferably at least five attributes representing permission of using the screen, business task competence, screen accessing competence, availability with respect to organizations and/or individuals, degrees of difficulty in executing business tasks, business task risk, time-series changes in business tasks, and special situations and relevant information on other screens.

13. A method for optimally executing business tasks as set forth in Claim 12, **characterized in that** said screen of a business task is displayed with symbols substituting for said keywords and/or attributes.

14. A method for optimally executing business tasks as set forth in Claim 1, 2, 3, 4, 4, 6 or 7, **characterized in that** said keywords are entered and displayed in at least one of a status field, a supplementary status field, and a detailed status field on a history preparation screen.

15. A method for optimally executing business tasks as set forth in Claim 1, 2, 3, 4, 4, 6 or 7, **characterized in that** said letter and/or items entered in said history preparation screen are registered in the database of a computer.

16. A method for optimally executing business tasks as set forth in Claim 1, 2, 3, 4, 4, 6 or 7, **characterized in that** said business tasks are executed in at least one of the manners including within an organization, between or among organizations, by an individual, between or among individuals, or between an individual and an organization.

17. A method for optimally executing business tasks by using respective screens of basic image information, basic text information, term management information, latest information, detailed history information and basic information edit,
said method being **characterized by** comprising the steps of:
shifting the screen from the basic text screen, basic image screen, latest information screen, and term management screen to the detailed history screen;
shifting the screen from the basic text screen, basic image screen, latest information screen, and term management screen to the basic information edit screen; and/or
shifting the screen from the detailed history screen to the basic information edit screen; and
communicating to transmit information by making said respective information screens shared between a person in charge of a company and an agent for information transmission so as to carry out the optimal work in the common business task environments for both parties.

18. A method for optimally executing business tasks by using respective screens of basic image information, basic text information, term management information, latest information, detailed history information and basic information edit,
said method being **characterized by** comprising the steps of:
shifting the screen from the basic text screen, basic image screen, latest information screen, or term management screen to the detailed history screen,
shifting the screen from the basic text screen, basic image screen, latest information screen, or term management screen to the basic information edit screen, and/or
shifting the screen from the detailed history screen to the basic information edit screen.

19. A method for optimally executing business tasks as set forth in Claim 17 or 18, **characterized in that** shifting one screen to another among the basic image screen, basic text screen, term management screen, latest information screen, detailed history screen, and basic information edit screen is carried out by a pull-down system.

20. A method for optimally executing business tasks as set forth in Claim 17 or 18, **characterized by** comprising the step of retrieving, re-arranging, task interrupting and canceling the interruption of resultant data displayed on the basic image screen, basic text screen, term management screen, latest information screen and detailed history screen.

21. A method for optimally executing business tasks as set forth in Claim 17 or 18, **characterized by** comprising the step of shifting the basic image screen to the basic information preparation screen, basic information edit screen, history preparation screen or detailed history screen.

22. A method for optimally executing business tasks as set forth in Claim 17 or 18, **characterized by** comprising the step of shifting the basic text screen to the basic information preparation screen, basic information edit screen, history preparation screen or detailed history screen.

23. A method for optimally executing business tasks as set forth in Claim 17 or 18, **characterized by** comprising the step of shifting the term management screen to the detailed history screen.

24. A method for optimally executing business tasks as set forth in Claim 17 or 18, **characterized by** comprising the step of shifting the latest information screen to the history preparation screen or detailed history screen.

25. A method for optimally executing business tasks as set forth in Claim 17 or 18, **characterized in that**, on said basic information edit screen, the basic information is newly registered and edited, edit of the basic information is deleted, and keywords are edited.

26. A method for optimally executing business tasks as set forth in Claim 17 or 18, **characterized in that**, on said basic information edit screen, basic information edit is carried out by executing an edit button after selecting a checkbox of the task item to be edited.

27. A method for optimally executing business tasks as set forth in Claim 17 or 18, **characterized by** comprising the steps of preparing the first new history information screen on which a predetermined status business task is carried out with respect to one task item, and preparing the second new history information screen on which the relevant business task schedule is managed by automatically calculating the next task on the basis of the arbitrary status on said history preparation screen.

28. A method for optimally executing business tasks as set forth in Claim 17 or 18, **characterized by** comprising the step of shifting the screen from the basic text screen, basic image screen, or latest information screen to the new history preparation screen.

29. A method for optimally executing business tasks as set forth in Claim 17 or 18, **characterized in that** the step of the detailed history includes the step of history edit, and the history edit is carried out by checking the checkbox of the list of basic information history.

30. A method for optimally executing business tasks as set forth in Claim 17 or 18, **characterized in that** a file pertaining to the history is attached to the history screen.

31. A method for optimally executing business tasks as set forth in Claim 17 or 18, **characterized by** comprising class normal screen, class international reduction screen, and update management screen.

32. A method for optimally executing business tasks as set forth in Claim 31, **characterized by** comprising the step of shifting the screen from the class normal screen, class international reduction screen, and update management screen to the detailed history screen.

33. A method for optimally executing business tasks as set forth in Claim 31, **characterized by** comprising the step of shifting the screen from the class normal screen or class international reduction screen to the keyword edit screen.

34. Results obtained by using the method for optimally executing business tasks as set forth in Claim 17 or 18 are the management and control of trademarks.

35. Results obtained by using the method for optimally executing business tasks as set forth in Claim 17 or 18 are the management and control of patents.

36. An apparatus for optimally executing business tasks by using the respective display screens of the basic image information, basic text information, term management information, latest information edit, and history information, said apparatus being **characterized by** comprising:
a computer apparatus provided with a device of shifting the screen from the basic text screen, basic image screen, latest information screen and term management screen to the detailed history screen, a device of shifting the screen from the basic text screen, basic image screen, latest information screen and term management screen to the basic information edit screen, and/or a device of shifting the detailed history screen to the basic information edit screen; and
a communication device for making the respective information screens shared between persons in charge in a company and agents and transmitting information so as to execute optimal business tasks in the common business task environments.

37. An apparatus for optimally executing business tasks as set forth in Claim 36, **characterized in that** said computer apparatus is provided with means for shifting the basic image screen to the basic information preparation screen, basic information edit screen, history preparation screen, or detailed history screen; means for shifting the basic text screen to the basic information preparation screen, basic information edit screen, history preparation screen, and detailed history screen; means for shifting the term management screen to the detailed history screen, and means for shifting the latest information screen to the history preparation screen or detailed history screen.

38. An apparatus for optimally executing business tasks as set forth in Claim 36, **characterized in that** the basic image screen, basic text screen, term management screen and latest information screen are provided with a menu field and a basic information data list field.

39. An apparatus for optimally executing business tasks as set forth in Claim 36, **characterized in that** said detailed history screen is provided with a menu field and a basic information history list.

40. An apparatus for optimally executing business tasks as set forth in Claim 36, **characterized in that** said detailed history screen is provided with a basic information field and a detailed history information field.

41. An apparatus for optimally executing business tasks as set forth in Claim 36, **characterized in that** said history preparation screen is provided with a first new history preparation screen and a second new history preparation screen, the first new history preparation screen being provided with a field of the basic information of a task item, a field where task items of the new history preparation are input and selected, and a field for the existing detailed history.

42. An apparatus for optimally executing business tasks as set forth in Claim 41, **characterized in that**
said first new history preparation screen is provided with fields for entering the date of occurrence, addresses pertaining to FROM/TO, selecting staff in charge of document preparation, selecting the type of documents, and selecting status supplements, and
said second new history preparation screen displays the contents confirmed on the previous screen, and is provided with the present history and information pertaining to the new business task.

43. An apparatus for optimally executing business tasks as set forth in Claim 41, **characterized in that** said history preparation screen is further provided with a subsequent history preparation screen.

44. An apparatus for optimally executing business tasks as set forth in Claim 36, **characterized in that** said latest information edit screen is provided with a field for basic information selected from the basic images, basic texts, latest information and term management.

45. An apparatus for optimally executing business tasks as set forth in Claim 36, **characterized in that** the menu field of said basic image screen is provided with features including selection of data group and screens, data display screen selection, data display screen selection, data display screen selection, data display screen selection, simple retrieval, default conditions, first cancellation, main menu, log out, registration certificate printing, downloading, inquiry, reset, page selection, page jumping, and help.

46. An apparatus for optimally executing business tasks as set forth in Claim 36, **characterized in that** the menu field of said basic text screen is provided with features including selection of group and screens, data display screen selection, data display screen selection, data display screen selection, data display screen selection, simple retrieval, default conditions, first cancellation, main menu, log out,
registration certificate printing, downloading, inquiry, reset, page selection, page jumping, and help.

47. An apparatus for optimally executing business tasks as set forth in Claim 36, **characterized in that** the menu field of said latest information screen is provided with features including selection of data group and screens, data display screen selection, data display screen selection, data display screen selection, data display screen selection, simple retrieval, default conditions, first cancellation, main menu, log out, registration certificate printing, downloading, inquiry, reset, page selection, page jumping, and help.

48. An apparatus for optimally executing business tasks as set forth in Claim 36, **characterized in that** the menu field of said term management screen is provided with features including selection of data group and screens, data display screen selection, data display screen selection, data display screen selection, data display screen selection, simple retrieval, default conditions, first cancellation, main menu, log out, registration certificate printing, downloading, inquiry, reset, page selection, page jumping, and help.

49. An apparatus for optimally executing business tasks as set forth in Claim 36, **characterized in that** said menu field of said detailed history (basic information) screen is provided with features including selection of data group and screens, data display screen selection, data display screen selection, data display screen selection, data display screen selection, simple retrieval, default conditions, first cancellation, main menu, log out, registration certificate printing, downloading, inquiry, reset, page selection, page jumping, and help.

50. An apparatus for optimally executing business tasks as set forth in Claim 36, **characterized in that** the menu field of said detailed history (history information) screen is provided with features including selection of data group and screens, data display screen selection, data display screen selection, data display screen selection, data display screen selection, simple retrieval, default conditions, first cancellation, main menu, log out, registration certificate printing, downloading, inquiry, reset, page selection, page jumping, and help.
